# EUROPEAN PATENT APPLICATION

(11) **EP 1 361 497 A2**
(43) Date of publication of application: **12.11.2003**
(21) Application number: 03252895.2
(22) Date of filing: 09.05.2003
(51) Int. Cl.: G06F 1/00

(54) **Contents distribution scheme using tamper-resistant processor**

(30) Priority: 09.05.2002 JP 2002134507
(71) Applicant: Kabushiki Kaisha Toshiba, Tokyo 105-8001 (JP)
(72) Inventor: Isozaki, Hiroshi, c/o Int. Prop. Division, Minato-ku, Tokyo (JP); Hashimoto, Mikio, c/o Int. Prop. Division, Minato-ku, Tokyo (JP)
(74) Representative: Midgley, Jonathan Lee

(57) **Abstract**

In a contents distribution system, a prescribed secret is stored in an encrypted state according to a corresponding program key by the contents receiving and viewing program executed at the reception device, so that this prescribed secret cannot be altered by a malicious person. Also, the contents transmission program executed at the transmission device authenticates the prescribed secret of the contents receiving and viewing program by using either the public key algorithm or the secret key algorithm, and transmits the contents by trusting the reception device only when that authentication succeeds.

## Description

### BACKGROUND OF THE INVENTION

### FIELD OF THE INVENTION

The present invention relates to a contents distribution scheme, and more particularly to a contents distribution scheme utilizing a device adopting a tamperresistant processor which internally maintains a processor secret key.

### DESCRIPTION OF THE RELATED ART

In recent years, due to the spread of computer networks, it is becoming possible for the providers to distribute digital contents such as software, music data, etc., through a network such as Internet, without any degradation at cheap cost. On the other hand, it is becoming possible for the users to download these digital contents easily.

### <Viewpoint of the contents distribution by the contents provider>

Because of their property of the digital contents mentioned above that it is possible to copy them at cheap cost without degrading the quality, it is not easy to prevent the illegal copying without a consent of the copyright owner or impose the license control involving fee collecting once the contents are given to the hands of the users. It is also difficult to prevent the user who acquired the contents from pretending as if he is a producer of that contents by creating another contents utilizing that contents and making the secondary use of it illegally. In particular, the prevention of these illegal acts is difficult at an open system device that can utilize various programs such as PC (personal computer) and PDA (Personal Digital Assistant). This is because it is difficult for the current technology to prevent the program analysis by the user called reverse engineering.

In the information distribution using the Internet, the use of the Web browser is widespread. In the conventional Web browser, the cryptographic mechanism called SSL (Secure Socket Layer) is widely used in order to protect the secret of information to be distributed via the network. Although this mechanism can protect the privacy on a terminal side by limiting the delivery of the information from a server side only to a specific terminal and not allowing another terminal to identify the information currently viewed by that terminal, the delivered information will be stored at the terminal in a plaintext form, so that the unlimited copying and secondary use of that information becomes possible. Even if a mechanism for preventing the illegal copy utilizing the cryptographic technique is provided at the browser side, it is difficult to prevent the analysis and decoding of that mechanism by the reverse engineering in the case of the software of PC or PDA.

Of course, it is possible to restrict the copying of the delivered information by applying the secondary encryption to the information at the server, but that in turn makes it impossible to reproduce and utilize the information at the browser so that it becomes less convenient.

In order to prevent the illegal secondary use of the contents, there is a known technique called digital watermark in which the contents producer embeds information including a copyright indication in a form that is inseparable from the contents itself, and that information is used for tracking the illegal copy and controlling the utilization. By embedding the digital watermark into the information at the server side, it is possible to identify the original copyright owner from the information of the illegal secondary use according to the current technology.

However, in order to prevent the illegal use of the information fundamentally, it is indispensable to identify a route through which the information is subjected to the illegal secondary use and take an appropriate measure, rather than just detecting the illegal secondary use. However, it is difficult to embed any information that can enable to identify the route into the contents according to the current mechanism, for the following two reasons.

One reason is that there is no means for embedding a trustworthy route identifying information at the client side. Even in the current information delivery mechanism, it is possible for the server side to identify the user and embed the user information such by using means such as the digital watermark. However, the load on the server increases as the number of deliveries increases, which in turn raises the delivery cost. It also becomes impossible to use the server's load relieving means such as the cache server.

Another reason is related to the viewpoint of the user's privacy protection. In the current information delivery mechanism described above, it is inevitable to rely on the identification of the personal information of the user in order to surely identify the terminal from the server side, so that it amounts to the identification by the server side of an individual who delivered the information, and the user side has a concern for the privacy information leakage which can be an obstacle for the utilization. On the other hand, when the server side is negligent about the appropriate management of the collected user information, there is a risk of causing the user information leakage and being charged for the violation of the duty of confidentiality with the user.

On the other hand, there has been a proposition of a system capable of protecting secrets of a program and data to be processed of an application program in the multi-vendor open system (U.S. Patent Application Serial No. 09/781,284). By applying this technique, there is a possibility of being capable of guaranteeing the appropriate handling of the delivered information (such a software will be referred to as a protected software). However, even if such a software exist, when the conventional terminal side program (conventional software) is coexisting on the network, there is a need for the server to distinguish these terminal softwares such that the copyright protected information is delivered only to the protected software and not to the conventional software.

Summarizing the above, there has been no mechanism conventionally that can surely prevent the copying in the process of the software processing on the terminal side even if the information is specified as copying impossible at the server side.

Also, even if there is a terminal software that can surely prevent the copying (protected software), there has been no mechanism by which the server can distinguish the other kind of a terminal software (conventional software) and the protected software by the authentication on the network and deliver the copyright protected information only to the protected software.

Also, in addition to that problem, there has been no means for embedding the route identifying information into the delivered contents which is secure and efficient. More specifically, there has been no method by which the embedding of the route identifying information can be carried out surely at the terminal side and there is no need to disclose the privacy information of the user to the server side at a time of the embedding.

Now, as a modified form of the contents delivery by the contents provider, there is a form that utilizes the cache server.

By utilizing the cache server, it becomes possible to distribute a large amount of contents, and in addition, it becomes possible for the contents producer to construct a distribution server at cheap cost by distributing load to the cache server such that the processing power required for the contents delivery server can be suppressed low and as a result the load of the contents producer can be suppressed low.

Conventionally, at a time of distributing the contents by utilizing the cache server, the contents provider cannot surely check whether the cache server is delivered only to the users who are faithful to restrictions such as license. Also, when the cache server is managed by a malicious manager, it has been impossible to prevent the illegal copying of the contents and the delivery to unspecified many users which are contrary to the wish of the contents provider. In addition, when the license for individual user is to be managed, there is a need to carry out the authentication processing and the customer management processing between the user and the contents distributor. Even in the case where this processing is carried out by the cache server as a proxy, it is necessary to trust the moral of the contents provider similarly.

Also, when the virus checking program is installed at the cache server, there is a need for this virus checking program to temporarily decrypt the contents for the purpose of the checking, but when that virus checking program is operated to attack the contents by the malicious manager, the decrypted contents is defenceless against such an attack.

### <Viewpoint of the contents acquisition by the contents user>

On the other hand, from a viewpoint of the contents user side, there are problems regarding whether the contents distributor is a legitimate server or not, and whether the distributed contents has been altered or not. In particular, in recent years, not only the server manager but also the general computer user are damaged in many cases by the computer virus such as Nimda or by the attack through the computer network of the Trojan horse or the like. Also, the case in which part of the information on a socially very reliable server is altered by these attacks and the user who viewed that information is damaged, that is the case of being indirectly attacked, is becoming noticeable. Consequently, it is beneficial for the user if it is possible for the user to accurately evaluate the security of the server through the network and avoid a danger by judging whether or not to use the server according to that evaluation.

However, the prior art for checking the security of the contents at the user side has the following problems.

In the case where there is an error in the setting or a defect in the software at a server for providing the contents or application delivery service, it is possible for a malicious user to alter the contents of that server and make it look as if it is the proper application or contents such that the virus or the Trojan horse is introduced when the other user downloads that improper application or contents.

In other words, currently, it is impossible to prevent the alteration of the information delivered by the server or the introduction of the virus due to an attach based on a trouble existing in the system program or application on the server side such as a buffer overflow attack, even if the server is run by a morally trustworthy manager.

Here, as a method for preventing the server user's computer from being infected by the virus when there are many servers on the network which are infected by the virus due to the above described attack, it should be possible to confirm that it is secure against the attacks by the known schemes if it is possible to confirm that a version of server's program is that for which measures against various attacks have been taken.

However, in the prior art, there is only a function for simply acquiring a version number or the like of the program operating on the server, and such a version information can be easily forged by the virus producer by altering the server program so that it could not have been a sufficiently trustworthy means for checking.

In the following, the conventional programs from a viewpoint of the checking of the security of the contents by the user side will be described for some concrete example.

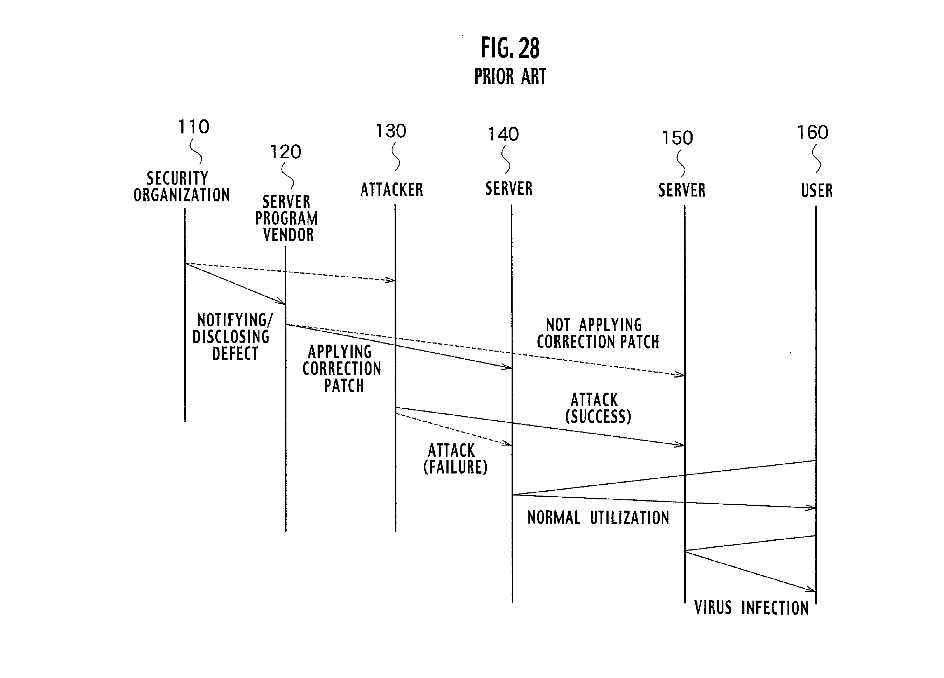

Fig. 28 to Fig. 31 show the operations in time series of a security organization 110 for disclosing and providing a security alert information of the server program, a server program vendor 120 for distributing the server program, a malicious attacker 130, servers 140 and 150 which have a function for distributing contents, and a user 160 of these servers 140 and 150.

Fig. 28 shows a conventional contents acquisition method without the server version check.

In general, the security alert information for the server program regarding the security, especially the security hole, is often widely notified and disclosed in a form of a recommendation from the security organization 110. The server program vendor 120 produces the correction program according to such a security alert information, and discloses it to the server managers by utilizing the Internet, for example. In the following, this correction program will be referred to as a correction patch. Of course, there are cases where the server program vendor voluntarily discloses the correction patch before the security organization discloses the security hole to the general public.

The server user voluntarily acquires the correction patch disclosed by the server program vendor, and applies it to the server under the own management. Of course the application of the correction patch is not compulsory so that not necessarily every server manager is applying the latest correction patch in the current state of affairs.

In the concrete example shown in Fig. 28, suppose that the server 140 applied the correction patch but the server 150 did not apply the correction patch.

On the other hand, the malicious attacker 130 produces an attack program for attacking the servers by analyzing the disclosed security alert information and the correction patch, and carries out the attack against the servers. Here, suppose that the malicious attacker 130 carried out the attack against the server 140 and the server 150.

The server 140 which applied the correction patch can prevent this attack. However, the server 150 has a possible danger of a takeover by the attacker 130 because the correction patch is not applied. In this concrete example, suppose that the attack against the server 150 succeeded, and the contents are altered after the attack and the proper contents are replaced by the contents containing virus.

When the user 160 attempts to utilize the contents of the servers 140 and 150, the user can utilize the proper contents from the server 140, but the contents of the server 150 are already altered into the contents containing virus by the attacker so that when the user 160 downloads the contents from the server 150 without knowing that it is the contents containing virus, the computer of the user 160 will be infected by the virus.

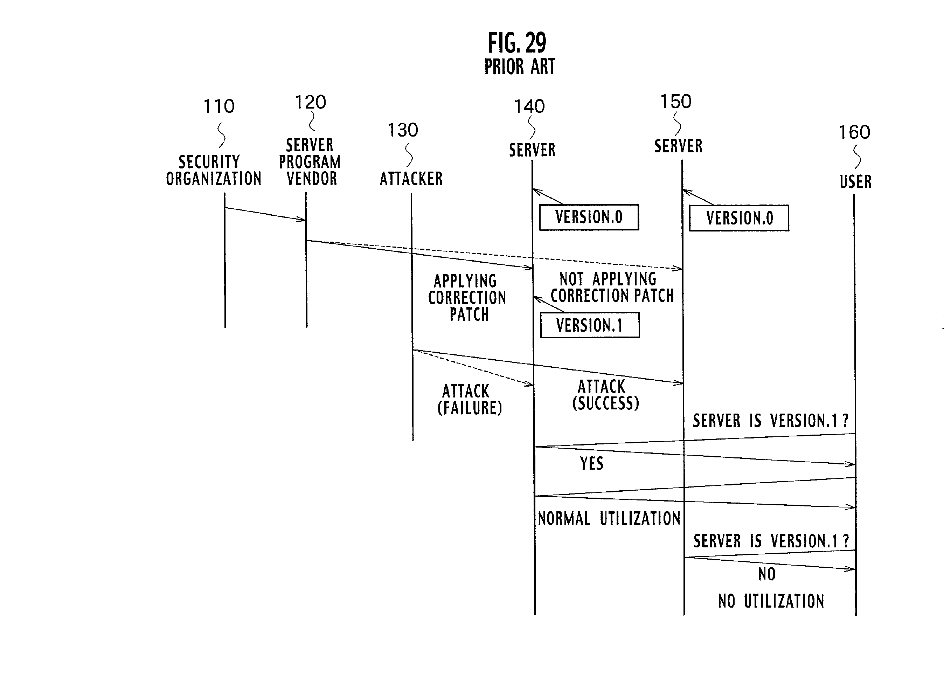

In view of this, in a concrete example shown in Fig. 29, a method for preventing the downloading of the contents containing virus in which the user judges whether the server is altered or not by checking the version number of the server before downloading the contents.

Here, it is assumed that the version number of the server program with the defect regarding the security is "0", and the version number of the server becomes "1" when the correction patch is applied to the server program.

The difference from the example of Fig. 28 is that the server user 160 installs the server checking program into the own computer, activates this server checking program before carrying out the downloading, and downloads the contents from there only when it is the server with the version number "1" to which the correction patch has been applied.

When the user 160 checks the server program in this way, the server 140 to which the correction patch has been applied has the version number "1" so that the user 160 makes the normal utilization of that server 140. In this example, the user 160 downloads the contents. On the other hand, the server 150 to which the correction patch has not been applied has the version number "0", so that the user 160 does not download the contents from there. For this reason, it is possible to prevent the virus infection.

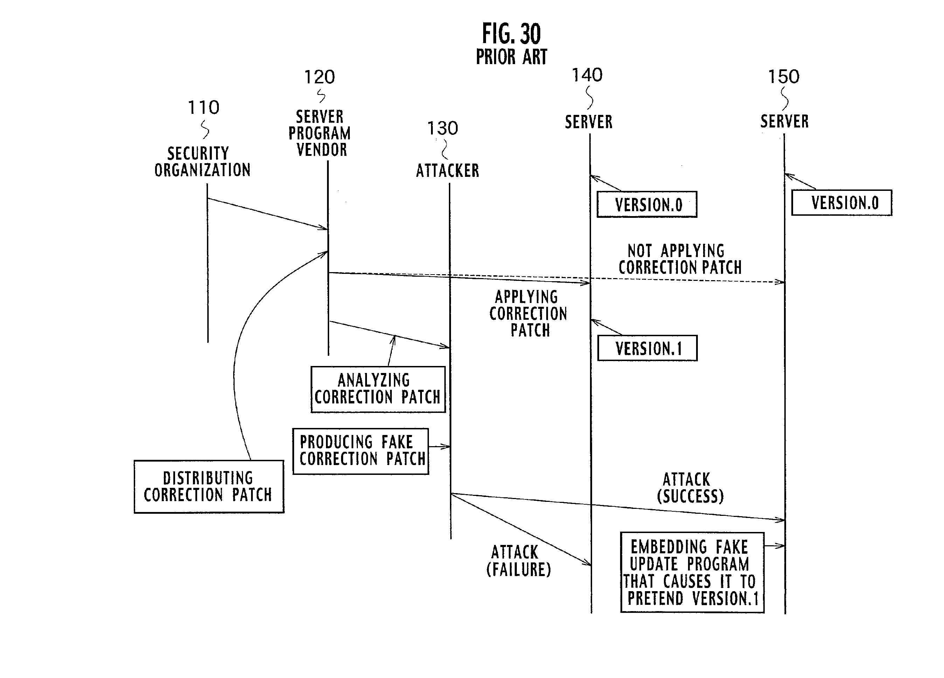

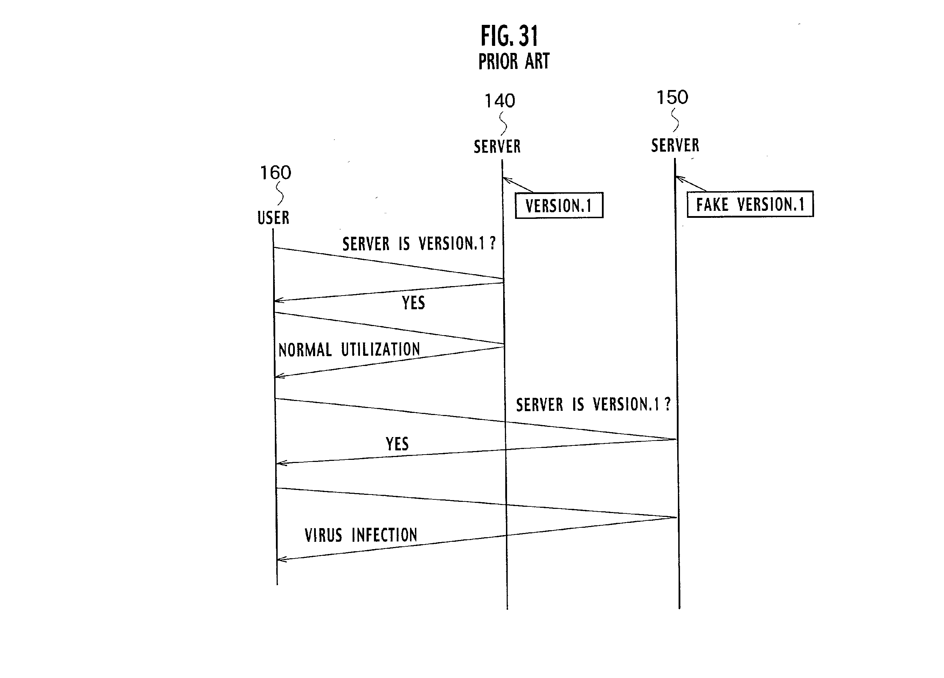

However, there is an exemplary case where the virus infection cannot be completely prevented even by this method, which is shown in Fig. 30 and Fig. 31.

In general, the correction patch is widely disclosed so that it is relatively easy for the malicious attacker to acquire it and analyze it.

In this example, suppose that the malicious attacker 130 analyzes the distributed correction patch, produces a fake correction patch that gives a false version number to the server checking program, and carries out an attack for applying this fake correction patch when the attack succeeds. In the example of Fig. 30, the attack against the server 140 to which the legitimate correction patch has been applied fails. On the other hand, the attack against the server 150 to which the correction patch has not been applied succeeds, and the above described fake correction patch is applied.

In such a case, even if the user 160 activates the server checking program before the downloading, the contents containing virus will be downloaded from the server 150 without knowing that a false version number is received from this server 150 to which the fake correction patch has been applied.

This danger cannot be removed even if a complicated encryption protocol is used between the server and the user at a time of the downloading, because once the server program and the correction patch are analyzed, it becomes possible for the attackers to incorporate a processing for reproducing the encryption protocol into the fake correction patch. Consequently, the user will not notice that the server is the already attacked server to which the fake correction patch has been applied.

Summarizing the above, the following two points are problematic.

One is that the version check of the server is insufficient for evaluating the security of the server. Also, there is a need to make sure that the processing for evaluating the security is carried out.

Another is that it is possible for the attacker to produce a program for reproducing the operations of the server program and the correction patch once the server program and the correction patch are analyzed.

In the above, the "viewpoint of the contents distribution by the contents provider" and the "viewpoint of the contents acquisition by the contents user" have been described, and when these viewpoints are taken together, what are important for both the copyright owner and the contents user in the contents distribution through the network are that the copyright owner can surely prevent the illegal copying and that the contents user can acquire the contents only from the secure server by evaluating the security of the server before downloading the contents.

### BRIEF SUMMARY OF THE INVENTION

It is therefore an object of the present invention to provide a contents distribution scheme by which the distributor side can distribute the contents with a sense of security and the receiver side can receive the trustworthy contents.

More specifically, it is an object of the present invention to provide a contents distribution scheme capable of distributing the contents while properly protecting the right of the copyright owner of the contents and the privacy of the receiver, by which the receiver can receive the contents while surely checking the security of the contents distribution server.

It is another object of the present invention to provide a contents distribution scheme capable of distributing the contents while properly protecting the right of the copyright owner of the contents and the privacy of the receiver.

It is another object of the present invention to provide a contents distribution scheme by which the receiver can receive the contents while securely checking the security of the contents distribution server.

According to one aspect of the present invention there is provided a contents distribution method executed by a transmission device having a microprocessor and a reception device having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising: storing a prescribed secret in a state of being encrypted by using a corresponding program key and proving that the prescribed secret is maintained to the transmission device, by a contents receiving and viewing program executed on the reception device; receiving a reception request specifying contents from the contents receiving and viewing program of the reception device by a contents transmission program executed on the transmission device; authenticating the prescribed secret of the contents receiving and viewing program of the reception device that issued the reception request, by a prescribed public key algorithm based on a public key that is corresponding to a secret key of the contents receiving and viewing program and maintained in advance by the contents transmission program, or by a secret key algorithm based on a secret key that is maintained in advance by the contents transmission program and shared with the contents receiving and viewing program, by the contents transmission program; and permitting a transmission of the contents encrypted by using the prescribed secret that is shared between the contents receiving and viewing program and the contents transmission program exclusively from other programs, only when it is proved that the contents receiving and viewing program has the prescribed secret at the authenticating step, by the contents transmission program.

According to another aspect of the present invention there is provided a contents distribution method executed by a transmission device having a tamper resistant microprocessor which maintains a processor secret key inside and an external memory, and a reception device, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising: storing a secret key that is set in correspondence to the contents transmission device, in a state of being encrypted by using a corresponding program key, by a contents transmission program executed on the transmission device; authenticating the contents transmission program that is a transmission source of contents, by a prescribed public key algorithm based on a public key that is corresponding to the secret key of the contents transmission program and maintained in advance by a contents receiving and viewing program, by the contents receiving and viewing program of the reception device; and receiving the contents from the contents transmission program only when it is proved that the contents transmission program has the secret key at the authenticating step, by the contents receiving and viewing program.

According to another aspect of the present invention there is provided a contents distribution method executed by a transmission device and a reception device each having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising: storing a prescribed secret in a state of being encrypted by using a corresponding program key and proving that the prescribed secret is maintained to a correspondent, by each one of a contents receiving and viewing program executed on the reception device and a contents transmission program executed on the transmission device; permitting an execution of a transmission device checking program received from the reception device at the transmission device, and verifying a security level of the transmission device by the transmission device checking program at the reception device, when it is judged that the correspondent has the prescribed secret at the proving step; and receiving contents regarding a contents reception request from the transmission device at the reception device, when it is judged that the transmission device is secure.

According to another aspect of the present invention there is provided a contents distribution system comprising a transmission device having a microprocessor and a reception device having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein: the tamper resistant microprocessor of the reception device executes a contents receiving and viewing program for storing a prescribed secret in a state of being encrypted by using a corresponding program key and proving that the prescribed secret is maintained to the transmission device; and the microprocessor of the transmission device executes a contents transmission program for receiving a reception request specifying contents from the contents receiving and viewing program of the reception device, authenticating the prescribed secret of the contents receiving and viewing program of the reception device that issued the reception request, by a prescribed public key algorithm based on a public key that is corresponding to a secret key of the contents receiving and viewing program and maintained in advance by the contents transmission program, or by a secret key algorithm based on a secret key that is maintained in advance by the contents transmission program and shared with the contents receiving and viewing program, and permitting a transmission of the contents encrypted by using the prescribed secret that is shared between the contents receiving and viewing program and the contents transmission program exclusively from other programs, only when it is proved that the contents receiving and viewing program has the prescribed secret.

According to another aspect of the present invention there is provided a contents distribution system comprising a transmission device having a tamper resistant microprocessor which maintains a processor secret key inside and an external memory, and a reception device, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein: the tamper resistant microprocessor of the transmission device executes a contents transmission program for storing a secret key that is set in correspondence to the contents transmission device, in a state of being encrypted by using a corresponding program key; and the reception device executes a contents receiving and viewing program for authenticating the contents transmission program that is a transmission source of contents, by a prescribed public key algorithm based on a public key that is corresponding to the secret key of the contents transmission program and maintained in advance by the contents receiving and viewing program, and receiving the contents from the contents transmission program only when it is proved that the contents transmission program has the secret key.

According to another aspect of the present invention there is provided a contents distribution system comprising a transmission device and a reception device each having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein: the tamper resistant microprocessor of the reception device executes a contents receiving and viewing program and the tamper resistant microprocessor of the transmission device executes a contents transmission program, for storing a prescribed secret in a state of being encrypted by using a corresponding program key and proving that the prescribed secret is maintained to a correspondent; the transmission device permits an execution of a transmission device checking program received from the reception device, and the reception device verifies a security level of the transmission device by the transmission device checking program, when it is judged that the correspondent has the prescribed secret; and the reception device receives contents regarding a contents reception request from the transmission device, when it is judged that the transmission device is secure.

Other features and advantages of the present invention will become apparent from the following description taken in conjunction with the accompanying drawings.

### BRIEF DESCRIPTION OF THE DRAWINGS

Fig. 1 is a block diagram showing a transmission and reception network system to which a contents distribution scheme according to one embodiment of the present invention is applied.
Fig. 2 is a diagram showing a configuration of contents used in the contents distribution scheme according to one embodiment of the present invention.
Fig. 3 is a block diagram showing a hardware configuration of a file transmission device used in the contents distribution scheme according to one embodiment of the present invention.
Fig. 4 is a block diagram showing a hardware configuration of a file reception device used in the contents distribution scheme according to one embodiment of the present invention.
Fig. 5 is a block diagram showing a software configuration of a contents distribution server used in the contents distribution scheme according to one embodiment of the present invention.
Fig. 6 is a block diagram showing a software configuration of a file reception device used in the contents distribution scheme according to one embodiment of the present invention.
Fig. 7 is a sequence chart showing exchanges between a contents distribution program and a contents reception program in the contents distribution scheme according to one embodiment of the present invention.
Fig. 8 is a flow chart showing a processing procedure of a contents reception program in the contents distribution scheme according to one embodiment of the present invention.
Fig. 9 is a flow chart showing a processing procedure of a contents distribution program in the contents distribution scheme according to one embodiment of the present invention.
Fig. 10 is a diagram showing an exemplary form of an encryption attribute attached to contents used in the contents distribution scheme according to one embodiment of the present invention.
Fig. 11 is a sequence chart showing a processing procedure for embedding a route identifying information in the contents distribution scheme according to one embodiment of the present invention.
Fig. 12 is a block diagram showing a hardware configuration of a file transmission device used in the contents distribution scheme according to one embodiment of the present invention in the case where a client program authenticates a contents distribution server.
Fig. 13 is a block diagram showing a hardware configuration of a file reception device used in the contents distribution scheme according to one embodiment of the present invention in the case where a client program authenticates a contents distribution server.
Fig. 14 is a block diagram showing a software configuration of a contents distribution server used in the contents distribution scheme according to one embodiment of the present invention in the case where a client program authenticates a contents distribution server.
Fig. 15 is a block diagram showing a software configuration of a file reception device used in the contents distribution scheme according to one embodiment of the present invention in the case where a client program authenticates a contents distribution server.
Fig. 16 is a block diagram showing a hardware configuration of a file reception device used in the contents distribution scheme according to one embodiment of the present invention in the case of carrying out a mutual authentication.
Fig. 17 is a block diagram showing a software configuration of a file reception device used in the contents distribution scheme according to one embodiment of the present invention in the case of carrying out a mutual authentication.
Fig. 18 is a flow chart showing a processing procedure of a client program in the contents distribution scheme according to one embodiment of the present invention in the case of carrying out a mutual authentication.
Fig. 19 is a flow chart showing a processing procedure of a contents distribution program in the contents distribution scheme according to one embodiment of the present invention in the case of carrying out a mutual authentication.
Fig. 20 is a diagram showing an exemplary form of a policy table used in the contents distribution scheme according to one embodiment of the present invention.
Fig. 21 is a block diagram showing a transmission and reception network system containing a cache server to which a contents distribution scheme according to one embodiment of the present invention is applied.
Fig. 22 is a block diagram showing a hardware configuration of a cache server used in the contents distribution scheme according to one embodiment of the present invention.
Fig. 23 is a block diagram showing a software configuration of a cache server used in the contents distribution scheme according to one embodiment of the present invention.
Fig. 24 is a sequence chart showing exchanges between a contents distribution server and a cache server, and between a cache server and a user in the contents distribution scheme according to one embodiment of the present invention.
Fig. 25 is a flow chart showing a processing procedure of a cache server up to a point of receiving contents from a contents distribution server in the contents distribution scheme according to one embodiment of the present invention.
Fig. 26 is a flow chart showing a processing procedure of a cache server up to a point of transmitting contents to a user in the contents distribution scheme according to one embodiment of the present invention.
Fig. 27 is a block diagram showing a configuration of a virus checking program used in the contents distribution scheme according to one embodiment of the present invention.
Fig. 28 is a sequence chart showing a conventional contents acquisition method which does not use a server version checking.
Fig. 29 is a sequence chart showing a conventional contents acquisition method which uses a server version checking.
Fig. 30 is a sequence chart showing a conventional contents acquisition method in which a virus infection occurs even when a server version checking is used.
Fig. 31 is a sequence chart showing a conventional contents acquisition method in which a virus infection occurs even when a server version checking is used.

### DETAILED DESCRIPTION OF THE INVENTION

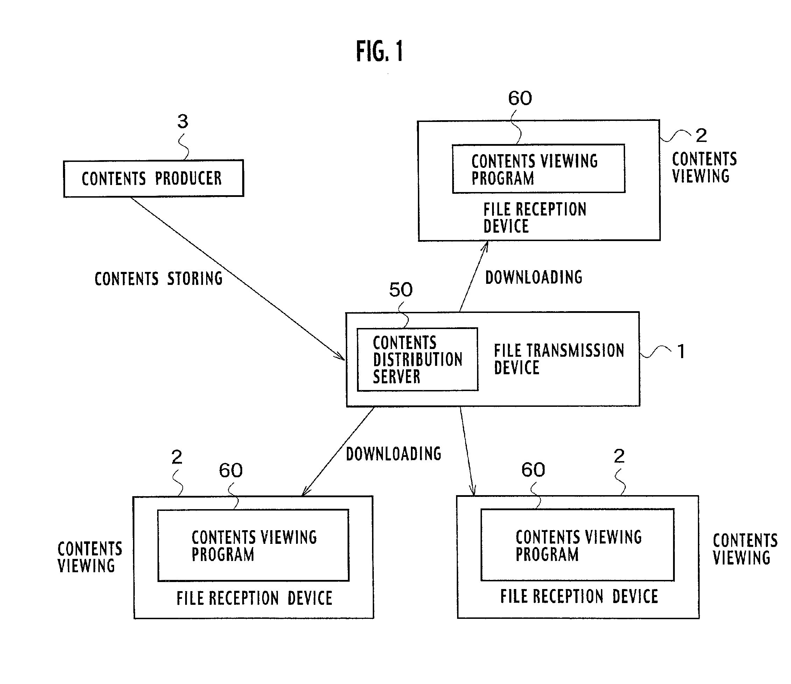

Referring now to Fig. 1 to Fig. 27, one embodiment of the contents distribution scheme according to the present invention will be described in detail.

### <Contents distribution scheme capable of checking a reliability of a contents receiving and viewing program>

Fig. 1 shows a configuration of a transmission and reception network system to which the contents distribution scheme of the present invention is applied.

This transmission and reception network system comprises a contents producer 3, a file transmission device 1, and a plurality of file reception devices 2. The file transmission device 1 contains a contents distribution server 50. Each file reception device 2 contains a contents viewing program 60. Here, the contents can be digital contents of music or video, or image contents of photograph or picture. Of course, it can also be contents of text. In the following, these contents are collectively referred to simply as contents.

First, the contents producer 3 produces contents, and stores that contents into the contents distribution server 50. This contents distribution server 50 is a Web server connected to a network such as the Internet, for example, which is operated on the file transmission device 1 and has a function for distribution contents in response to a request of a general user. The contents producer 3 and the contents distribution server 50 are in a trusting relationship, so that the contents will not be handled against the intention of the contents producer 3.

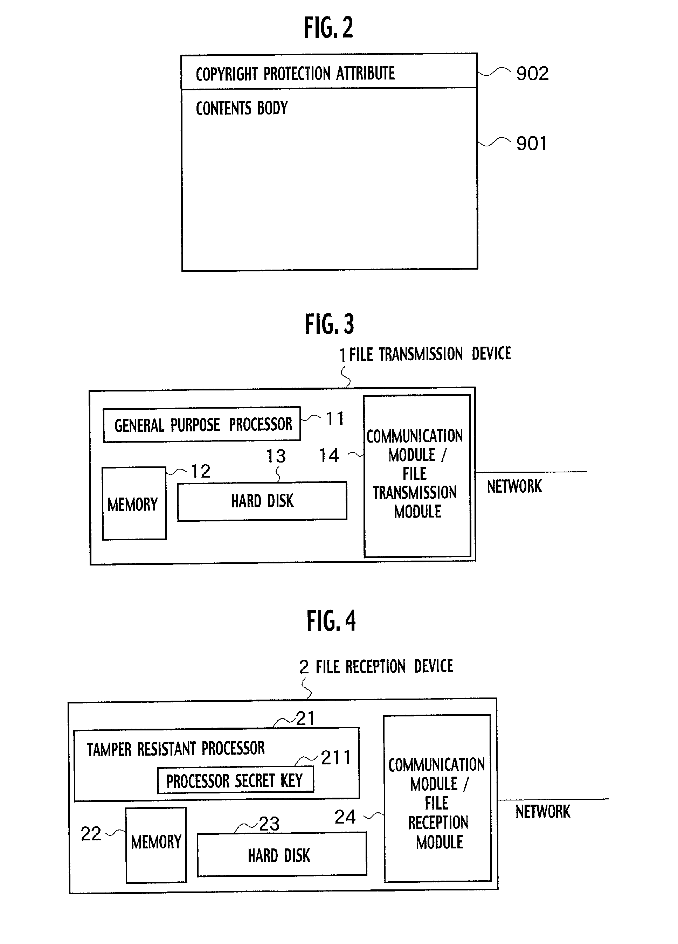

As shown in Fig. 2, the contents body 901 has a copyright protection attribute 902 provided as a field of at least one bit. This attribute can take at least two values including "1" indicating the presence of the copyright protection and "0" indicating the absence of the copyright protection. The contents distribution server 50 does not deliver the contents with the copyright protection to any client other than the already authenticated client to be described below. At the contents distribution server 50, the conventional contents which has no copyright protection attribute will be handled as contents without the copyright protection.

The file reception device 2 is a computer of the contents user, and this device is also connected to the network such as the Internet such that it is possible to carry out communications with other computers. Also, the file reception device 2 has a function for downloading the contents from the file transmission device 1 and viewing that contents. The user views the contents by utilizing the contents viewing program 60 installed in the file reception device 2. The user downloads the contents from the contents distribution server 50 and views the contents by using this contents viewing program 60. In the following, the contents viewing program is also referred to as a browser program.

Fig. 3 shows a hardware configuration of the file transmission device 1. In terms of the hardware, the file transmission device 1 comprises a general purpose processor 11, a memory 12, a hard disk 13, and a communication module/file transmission module 14.

Fig. 4 shows a hardware configuration of the file reception device 2. In terms of the hardware, the file reception device 2 comprises a tamper resistant processor 21 which maintains a processor secret key 211 inside, a memory 22, a hard disk 23 and a communication module/file reception module 24.

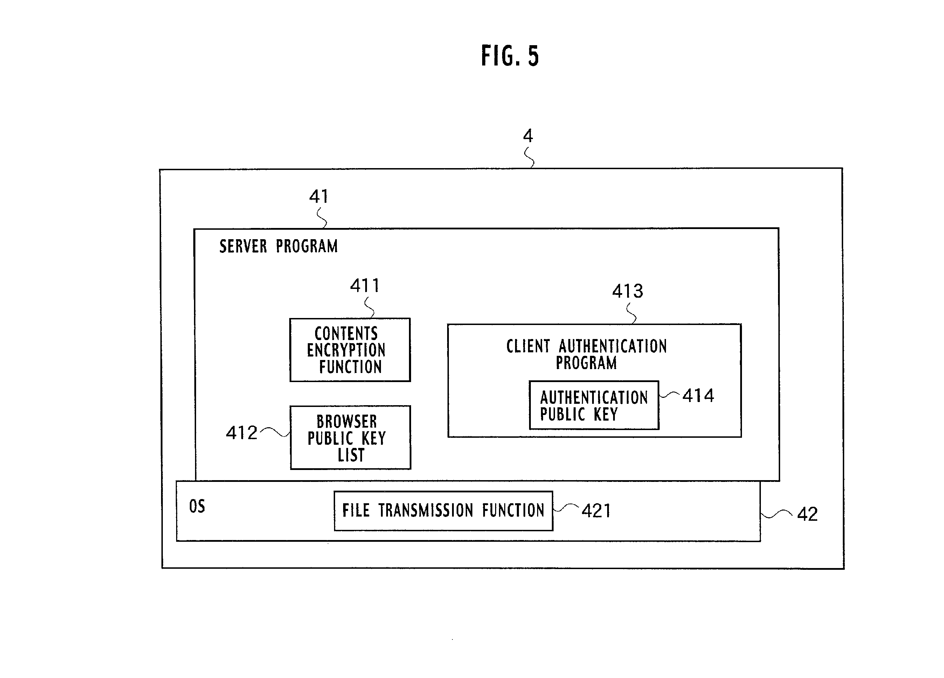

Fig. 5 shows a configuration of a software 4 of the contents distribution server 50. The software 4 of the contents distribution server 50 comprises a server program 41 and an operating system (OS) 42. The server program 41 contains a client authentication program 413 for carrying out the authentication with a client, a contents encryption function 411 for encrypting the contents, and a browser public key list 412 storing public keys of trustworthy browsers in advance. The client authentication program 413 has an authentication public key 414 corresponding to an authentication secret key in a browser program to be described below. Also, the OS 42 has a file transmission function 421.

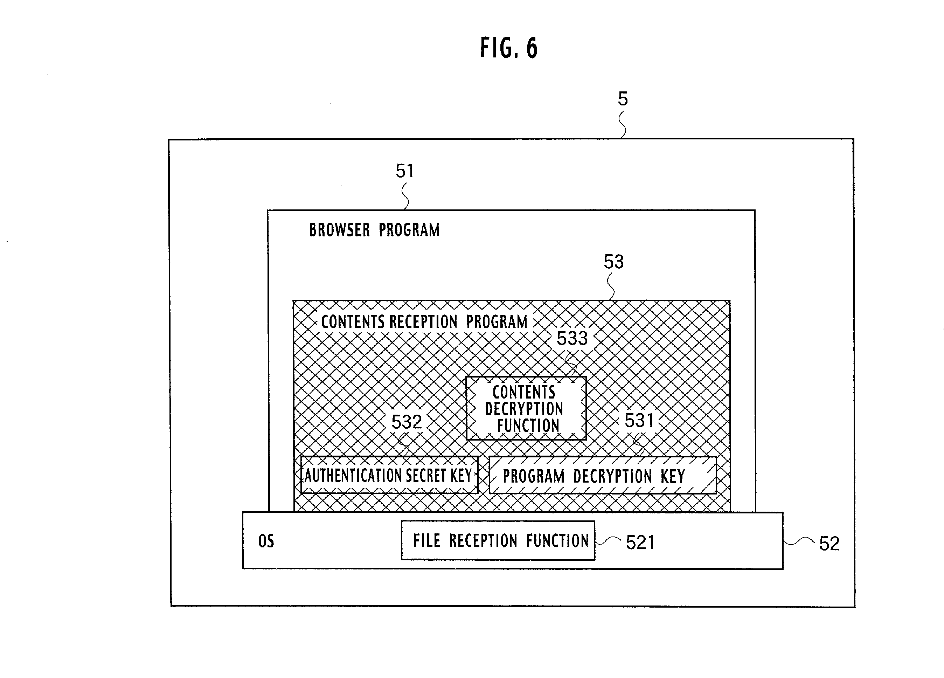

Fig. 6 shows a configuration of a software 5 of the file reception device 2. The software 5 of file reception device 2 comprises a browser program 51 and an OS 52. The browser program 51 has a contents reception program 53. and the contents reception program 53 contains a contents decryption function 533. a program decryption key 531, and an authentication secret key 532. Also, the OS 52 has a file reception function 521.

As mentioned above, the file reception device 2 has a microprocessor (tamper resistant processor 21) as described in U.S. Patent Application Serial No. 09/781,284. This processor has a mechanism for protecting the currently executed process, and is capable of preventing the manager of the file transmission device 1 from illegally peeping data. Also, the browser program 51 is encrypted by using the program encryption key managed by the software distributor, and decrypted at a time of the program execution by using the program decryption key 531 embedded in the software itself which is corresponding to the program encryption key. In addition, this program encryption key 531 is encrypted by using the public key algorithm such as the RSA algorithm by using a processor public key corresponding to the processor secret key 211 of the tamper resistant processor 21 in the file reception device 2 for executing the contents reception program 53.

Consequently, the program decryption key 531 for decrypting the program cannot be obtained unless one knows the processor secret key 211 maintained inside the tamper resistant processor 21, and as a result, it is impossible to analyze or alter the software.

Also, the authentication secret key 532 is a unique value selected for each version number of the contents reception program vendor and embedded in the contents reception program 53. The value of the authentication secret key 532 is kept secret to the others by the vendor, and only the corresponding authentication public key 414 is disclosed to the users. This authentication secret key 532 is also encrypted as a part of the data of the contents reception program 53. Consequently, this authentication secret key 532 cannot be rewritten as desired even by a manager of the file transmission device 1 or an attacker who acquired the manager privilege of this server by an illegal access.

Note that the contents reception program 53 may be provided in a form of an independent program, or incorporated as a part of the browser program 51. In the following, it is assumed that the contents reception program 53 is contained as a part of the functions of the browser program 51.

In the following, the procedure in the case where the contents distribution server 50 distributes the contents in response to a request of the user, the contents viewing program 60 receives that distributed contents, and the user views that contents will be described.

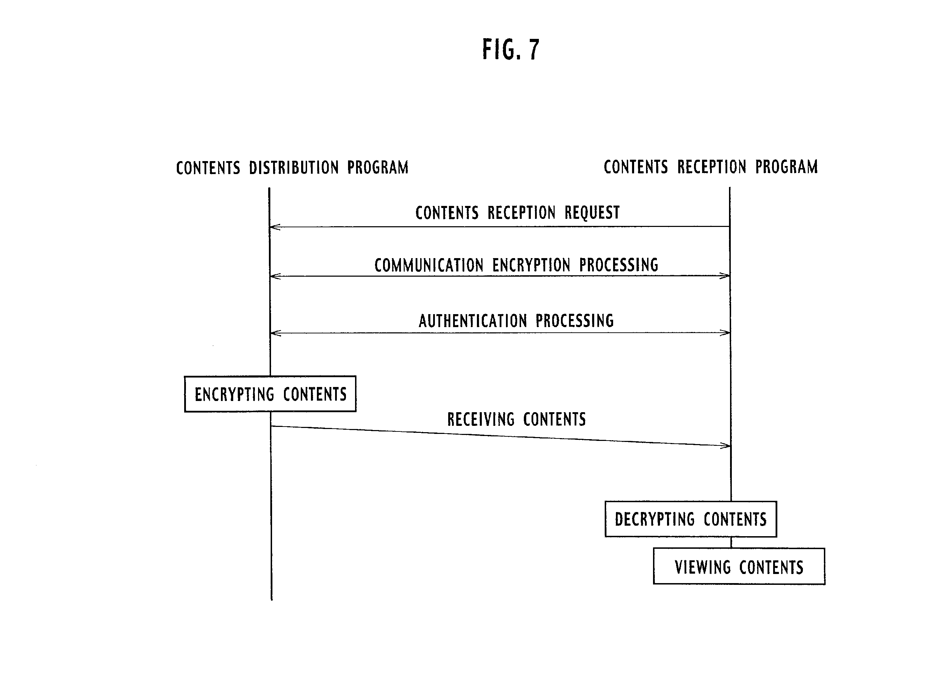

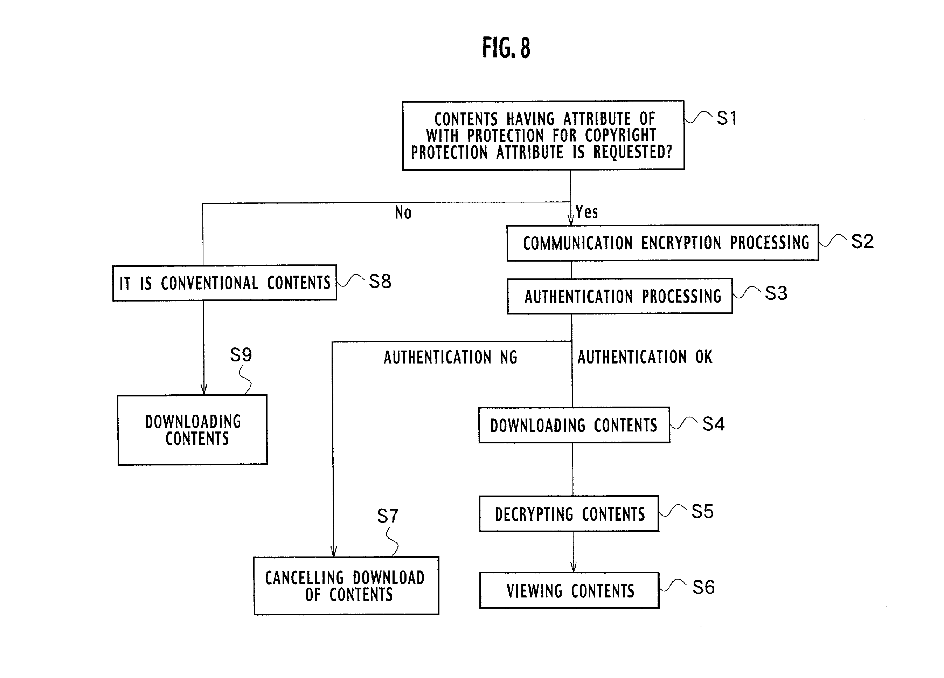

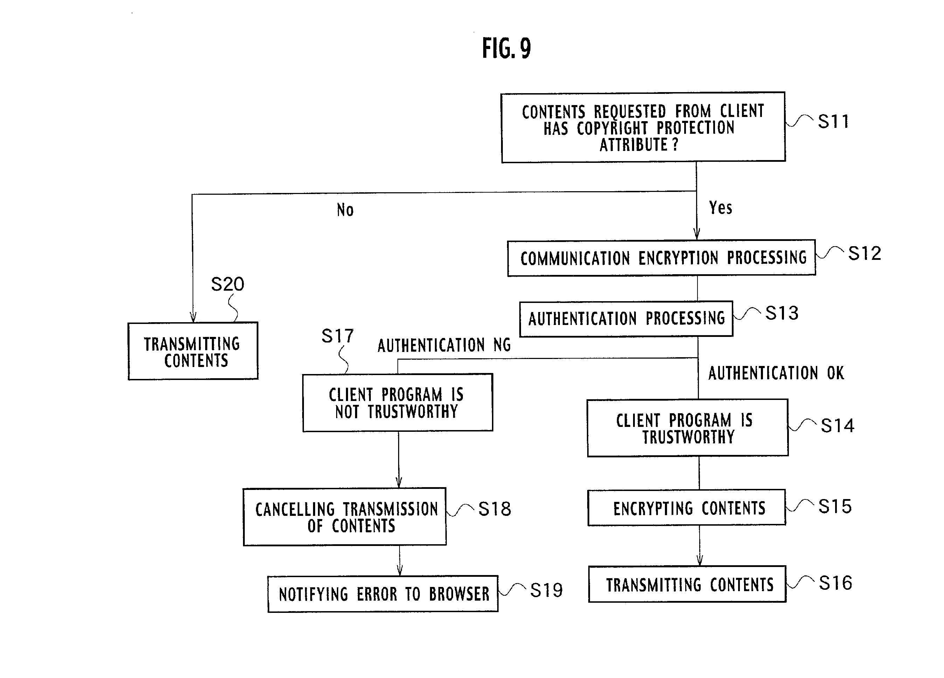

Fig. 7 shows a sequence of exchanges between the contents distribution program (server) and the contents reception program, Fig. 8 shows a processing procedure of the contents reception program, and Fig. 9 shows a processing procedure of the contents distribution program.

Upon receiving a command for the contents downloading from the user, the contents reception program issues a contents reception request to the contents distribution program (Fig. 7). When the attribute of the requested contents indicates the presence of the copyright protection (the case of affirmative at the step S11 (step S1) in Fig. 9 (Fig. 8)), the contents distribution program carries out a communication encryption processing (step S12 (step S2)) and a browser security authentication processing (step S13 (step S3)).

First, some encryption is applied to the communication path between the contents distribution server and the browser in order to prevent the eavesdropping by the third party (step S12 (step S2)). Here, it is assumed that the well known SSL is to be used, so that the SSL session is set up between the server and the browser. Note however that the SSL contains the server authentication processing, but this is carried out for the purpose of judgement by the user as to whether the server is trustworthy or not, and it is not indispensable for the purpose of the copyright protection of the contents distributed by the server which is the main purpose here.

Next, the contents distribution program carries out the authentication of the browser program according to the browser public key list 412 of the secure browsers (step S13 (step S3)). The authentication of the client can be done by the well known method such as that defined in the ISO/IEC 9798-3, for example. By this step, it is possible for the server to confirm that the browser has the proper authentication secret key 532.

When the authentication fails, the client program is judged as not trustworthy (step S17), the transmission of the information with the copyright protection is cancelled (step S18), and the error is notified to the browser (step S19). In the case of the insecure browser which does not have the proper authentication secret key 532, the error occurs and the contents with the copyright protection cannot be downloaded and utilized (step S7). Of course, the contents without the copyright protection can be viewed even by the insecure browser, so as to maintain the compatibility (step S8, step S20, step S9).

When the browser is authenticated as a secure one (step S14), the contents distribution program encrypts the contents to be distributed (step S15), and transfers the contents to the browser through the above described SSL session (step S16, step S4). The browser decrypts the contents by using the SSL session key (step S5), and the browser provides information to the user through the user interface (step S6). Here, for those with the copyright protection among the decrypted contents, their information is maintained in an encrypted data region for which only the browser program has a key, and this information and the key are discarded when the session is over. Also, the secure browser does not store the contents with the copyright protection in a form of a plaintext file or make a plaintext digital output. The action such as the printing is also prohibited depending on the encryption attribute setting. More on the encryption attribute will be described below.

As described above, the security of the authentication secret key 532 maintained by the browser software is guaranteed by the security of the processor secret key 211 maintained as a hardware of the tamper resistant processor 21, so that the server can confirm that the delivered information with the copyright protection will be handled securely by confirming that the session correspondent has the authentication secret key 532, through the network.

Here, the authentication secret key 532 is set for each vendor and each version of the contents reception program. Consequently, the server cannot identify the user or the terminal only by the authentication based on this key, so that the leakage of the privacy information of the user will not occur at all.

### [Encryption attribute]

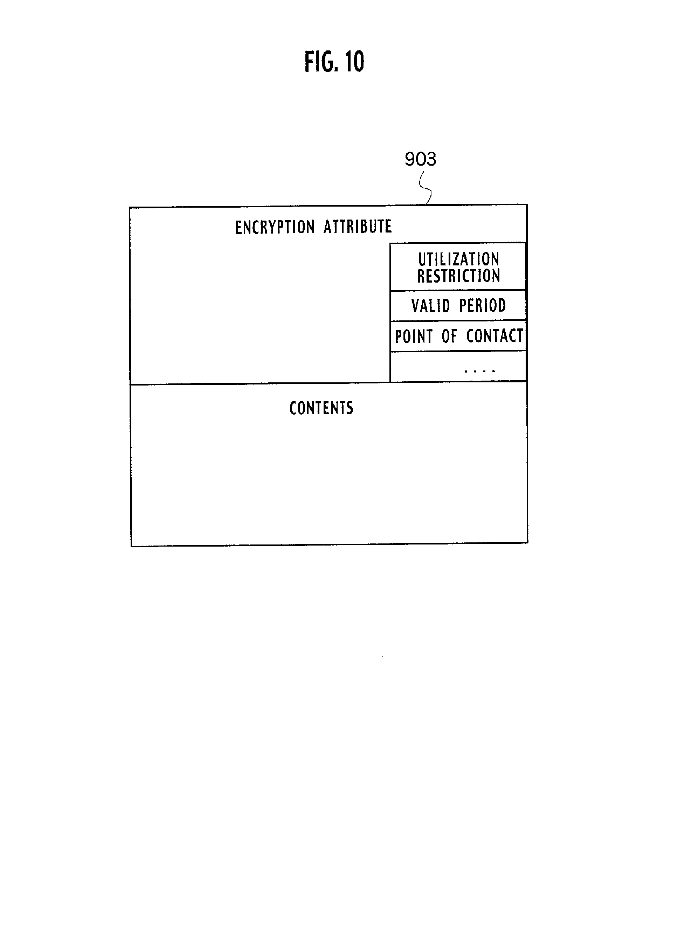

At a time of encrypting and transmitting the contents as described above, the contents is transmitted by attaching the encryption attribute 903 as shown in Fig. 10. The encryption attribute 903 is a table of information such as restrictions in utilizing contents, a control information of contents such as a valid period, a name and a point of contact of the author, an accounting information, an ID which is uniquely assigned at a time of the distribution by the distribution server, etc. In the following, an exemplary way of utilizing it will be described.

Suppose that the contents distributor owns a database such as that of the encyclopedia, and provides a service in which the database is distributed to the users by using CD-ROM or DVD, and set to be utilizable for free during a certain valid period as a trial period, but the user who wishes to utilize the database even after the valid period will be charged. Here, it is assumed that the valid period is attached to the contents as the encryption attribute, and the contents utilization is controlled by checking this valid period at a time of activation by the viewing program.

In the conventional method, it is in principle possible to alter the browser program such that the valid period is evaded, by analyzing the database viewing program, so that it has been impossible to surely protect the contents from such a malicious user. However, under the presumption that the browser program is encrypted and operated on the tamper resistant processor as described above, it is possible to prevent the illegal analysis or alteration of the encryption attribute by the third person other than the program distributor.

Consequently, it is impossible to alter the valid period of the contents or alter the browser program such that the valid period is evaded, so that it is possible to guarantee that the contents will be viewed surely by strictly observing the valid period.

### [Embedding of the route identifying information]

In the above described embodiment, the illegal copying is prevented as the browser does not make the plaintext output of the information with the copyright protection. However, the secondary use of duplication is possible for the contents such as images and speeches, by duplicating the image screen or making the analog recording. For the purpose of protecting the copyright more strictly for these contents, it is possible to provide a mechanism for identifying the leakage route of the information even in the case of the illegal secondary use of the contents, by the combined use of a method for embedding the route identifying information of the delivered data as a digital watermark.

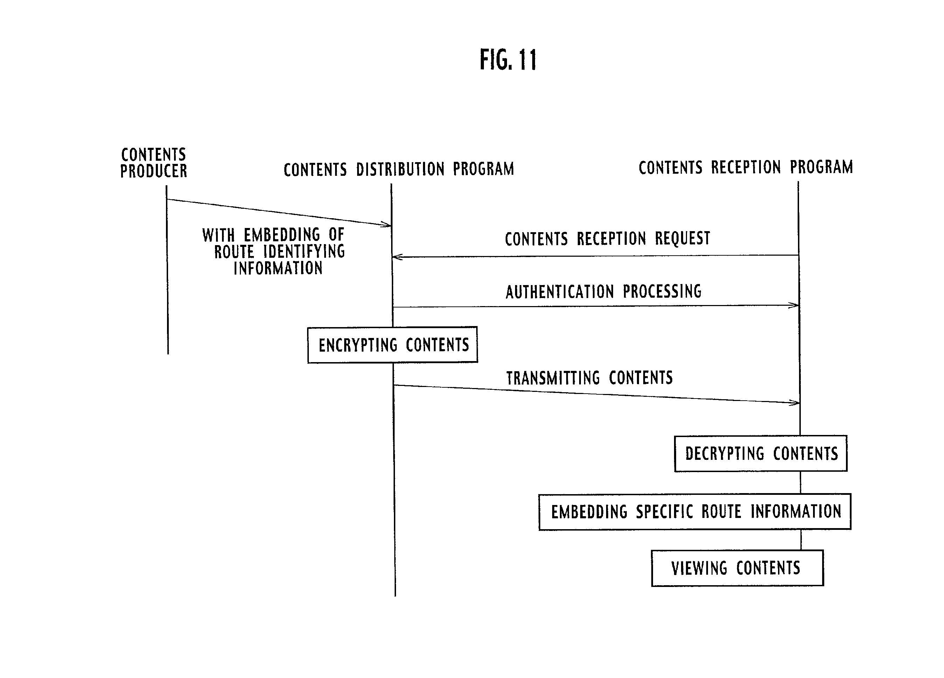

Fig. 11 shows the processing procedure for embedding the route identifying information.

First, the contents producer 3 specifies the presence or absence of the route identifying information embedding as a part of the copyright protection attribute. The processing similar to the above described embodiment is carried out for the delivery from the server to the browser. Finally, at the browser, the route identifying information is embedded into the contents of image, speech or text, and the image or speech for which the embedding is made is provided to the user through the browser. Note that there is a known digital watermark embedding technique for the character information such as slightly changing the character interval, and the character information for which the embedding is made by such a technique can be displayed at the browser in a form of an image.

There are various information that can be utilized as the route identifying information. For example, in the case of the Internet access terminal, the IP address, the provider name, and the session information of the access target can be recorded, such that the personal information of the user can be formed by matching information of the server and the provider. Also, the identity certificate information of an IC card or the like that is connected to the terminal or the physical body information such as the fingerprint may be recorded.

The remarkable point is that this embedding is carried out entirely at the user terminal, so that the leakage of the privacy information of the ordinary user will not occur at all.

As described above, conventionally such a management has been realized by identifying the user and embedding the appropriate information as the identification information at the contents distribution server side. However, such a management method requires a time and effort of the copyright owner for the purpose of the management of the user information, and the user has a risk of the privacy information leakage in the case where the copyright owner is not trustworthy.

According to the method of the present invention, the checking of the sure attaching of the identification information is dependent on the checking of the legitimacy of the distribution target viewing program on the presumption of the use of the tamper resistant processor, so that the sure attaching of the identification information can be realized without sending the personal information of the user to the contents distribution server. As the sending of the personal information is not involved, there cannot be any risk for the privacy information, and there is obviously no user information management load on the copyright owner either. This is a point at which the contents distribution scheme of the present invention is different from the conventional scheme which discloses the individual identifying information to the server, and this point makes the contents distribution scheme of the present invention more secure for the general users.

On the other hand, from a viewpoint of the copyright owner, the embedding of the correct route identifying information by the browser is cryptographically guaranteed as it is protected by the hardware of the tamper resistant processor, and this fact is confirmed by the authentication of the browser. In this regard, it can be said that the browser software plays a role of an agent for the copyright owner.

The browser user can confirm that the browser software is one that is supplied from the trustworthy vendor at a time of installing the browser software by verifying the hash value of a file. The trustworthy vendor guarantees that the browser will carry out the embedding of the route identifying information into the contents correctly as described above, so that the leakage of the personal information through the browser will not occur. Under such a presumption, it can be said that the browser of the present invention is functioning as a trustworthy third person between the contents copyright owner and the user, so that the protection of the right of the contents copyright owner and the security and the convenience of the user are made compatible.

This scheme is particularly effective in the case of distributing the information through a cache server. At a time the contents distribution server distributes the contents to the cache server, the eventual user is still not determined. Consequently, the contents distribution server cannot attach an additional information such as that indicating the identity of the contents user by using the conventional scheme. On the other hand, the scheme for entrusting the attaching of the identification information to the cache server generally cannot guarantee the protection of the privacy of the user and the certainty of the attaching of the identification information. However, by the use of the scheme of the present invention, it becomes possible to attach the identification information securely, while entrusting the cache server to play a role for distributing the contents to the individual user.

### <Contents distribution scheme capable of guaranteeing the security of the server>

Next, one embodiment of the contents distribution scheme according to the present invention which is capable of guaranteeing the security of the server will be described.

### [Unidirectional authentication from the client program to the contents distribution server]

First, the case in which only the unidirectional authentication from the client program to the contents distribution server is carried out will be described.

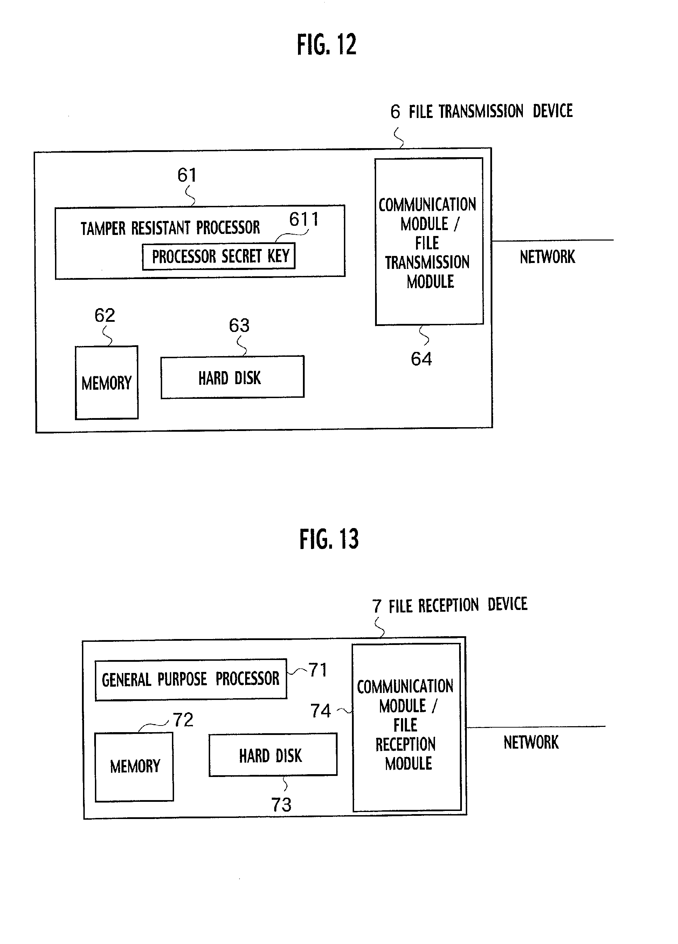

Fig. 12 shows a hardware configuration of the file transmission device 6 that contains the contents distribution server in this case. The file transmission device 6 comprises a tamper resistant processor 61 which maintains a processor secret key 611 inside, a memory 62, a hard disk 63 and a communication module/file transmission module 64.

Fig. 13 shows a hardware configuration of the file reception device 7 that has the client program in this case. The file transmission device 7 comprises a general purpose processor 71, a memory 72, a hard disk 73, and a communication module/file reception module 74.

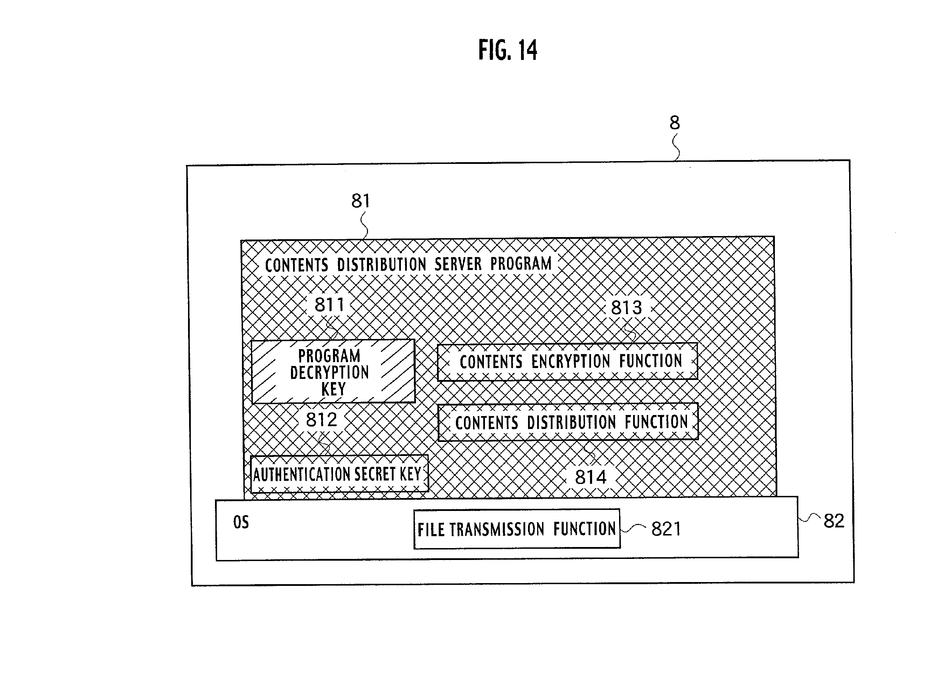

Fig. 14 shows a configuration of a software 8 of the contents distribution server. The software 8 of the contents distribution server comprises a contents distribution server program 81 and an operating system (OS) 82. The contents distribution server program 81 contains a contents encryption function 813 for encrypting the contents, a contents distribution function 814, a program decryption key 811, and an authentication secret key 812. Also, the OS 82 has a file transmission function 821.

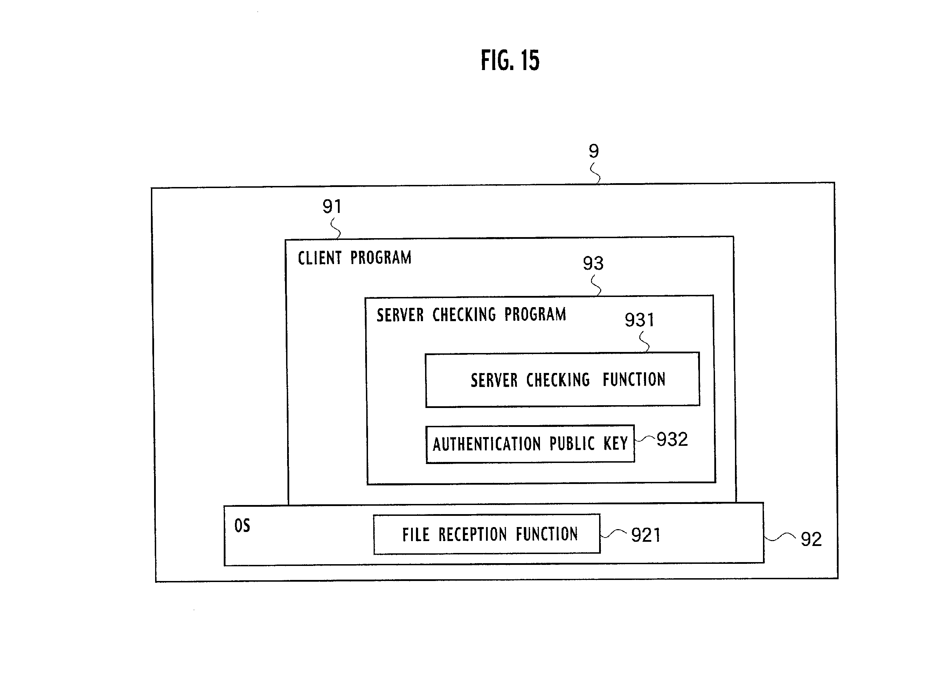

Fig. 15 shows a configuration of a software 9 of the file reception device 7. The software 7 of the file reception device 9 comprises a client program 91 and an OS 92. The client program 91 has a server checking program 93, and the server checking program 93 contains a server checking function 931 and an authentication public key 932. Also, the OS 92 has a file reception function 921. Note that the server checking program 93 may be provided independently from the client program 91 at an equal level.

The contents distribution server program 81 is encrypted by using the program encryption key corresponding to the program decryption key 811. In addition, this program decryption key 811 is encrypted by using the public key corresponding to the processor secret key 611 of the tamper resistant processor 61 in the file transmission device 6. Consequently, it is impossible to analyze or alter the software unless one knows the processor secret key 611.

The contents distribution server program 81 has the authentication secret key 812 as described above, and this will be used at the authentication step by the client to be described below. This authentication secret key 812 is a unique value selected for each version number of the server program vendor and embedded in the program.

The value of the authentication secret key 812 is kept secret to the others by the vendor, and only the corresponding authentication public key 932 is disclosed to the users. This authentication secret key 812 is also encrypted along with the server program as a part of the data of the server program. Consequently, this authentication secret key 812 cannot be rewritten as desired even by a manager of the file transmission device 6 or an attacker who acquired the manager privilege of this server by an illegal access.

On the other hand, as described above, the server checking program 93 executes the server checking function 931 for carrying out the authentication to judge whether the server has the server program of the proper version or not, and internally has the authentication public key 932 corresponding to the authentication secret key 812 maintained by the contents distribution server program 81.

Upon receiving the file reception request with respect to the server from the user, the file reception device 7 of the contents user activates the server checking program 93 with respect to this server. The server checking program 93 carries out the authentication of the access target server via the network. The authentication with the server can be done by the well known method such as that defined in the ISO/IEC 9798-3, for example. By this scheme, it is possible to confirm that the correspondent, which is the server in this case, has the proper authentication secret key 812 corresponding to the version number inquired by the client.

As described above, the authentication secret key 812 of the contents distribution server program 81 is kept secret by the vendor, and the value of the authentication secret key 812 embedded in the contents distribution server program 81 cannot be altered as a result of the function of the tamper resistant processor 61 of the server system, so that if the authentication using the public key succeeds, it becomes certain that the contents distribution server program 81 is of the expected version.

Consequently, the client system can evade a danger of the computer virus infection caused by the fact that the correction patch is not applied by the server program.

### [Mutual authentication between the client program and the contents distribution server]

In the above, the case of carrying out the unidirectional authentication of the contents distribution server by the client program has been described. In the following, the exemplary case of making a flexible server program security level evaluation in response a request of the contents user by carrying out the mutual authentication between the client program and the contents distribution server will be described.

In order to realize the mutual authentication between the client program and the contents distribution server, the hardware configuration and the software configuration of the contents distribution server side are the same as in the above described case of the unidirectional authentication. Namely, the file transmission device 6 in the configuration shown in Fig. 6 and the software 8 in the configuration shown in Fig. 14 are employed.

On the other hand, the hardware configuration and the software configuration of the client program side are different from the case of the unidirectional authentication.

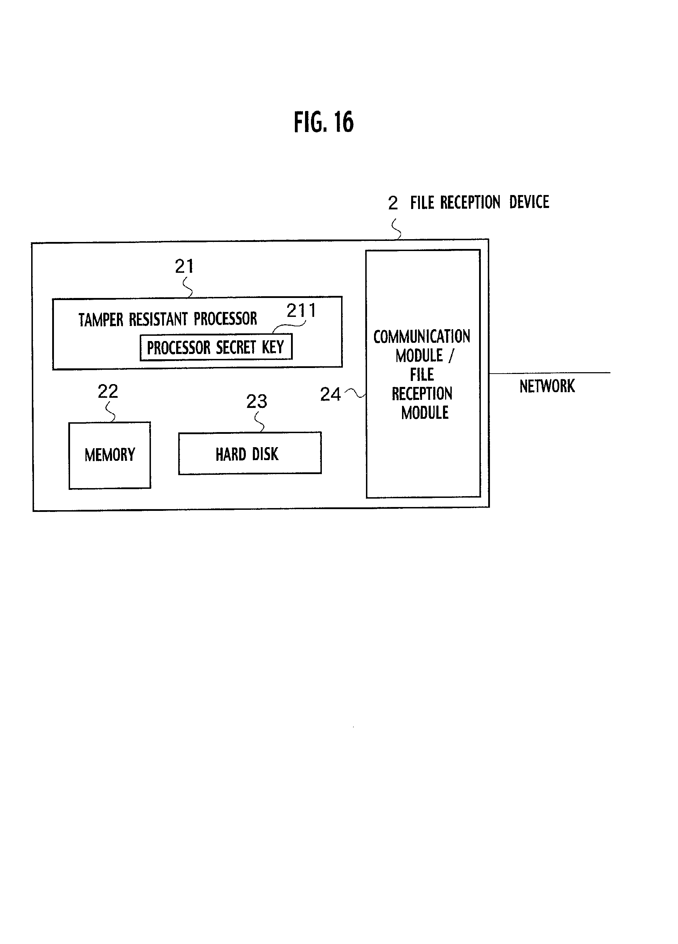

Fig. 16 shows a hardware configuration of the file reception device 2, which is identical to that shown in Fig. 4. Namely, the file transmission device 2 comprises a tamper resistant processor 21 which maintains a processor secret key 211 inside, a memory 22, a hard disk 23 and a communication module/file reception module 24.

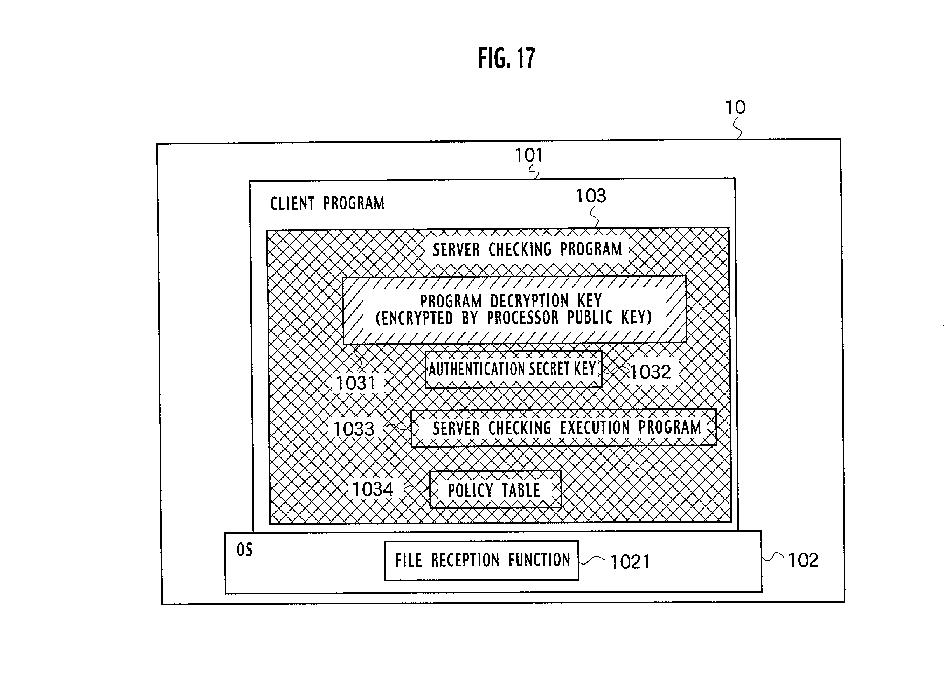

Fig. 17 shows a configuration of a software 10 of the file reception device 2. The software 10 of the file reception device 2 comprises a client program 101 and an OS 102. The client program 101 has a server checking program 103, and the server checking program 103 contains a server checking execution program 1033, a program decryption key 1031 which is encrypted by using the processor public key, an authentication secret key 1032, and a policy table 1034. Also, the OS 102 has a file reception function 1021. Note that the server checking program 103 may be provided independently from the client program 101 at an equal level.

The server checking program 103 is encrypted by using the program encryption key corresponding to the program decryption key 1031. In addition, this program decryption key 1031 is encrypted by using the public key corresponding to the processor secret key 211 of the tamper resistant processor 21 in the file reception device 2. Consequently, it is impossible to analyze or alter the software unless one knows the processor secret key 211.

The server checking execution program 1033 is an execution file for checking the version of the server, etc., which has a function for inquiring the version of the server, a function for checking whether the latest patch is applied to the server or not, etc. The authentication secret key 1032 is used in carrying out the mutual authentication with the server. The policy table 1034 is used in evaluating the security level of the server. More on the policy table will be described below.

In the following, the procedure in the case where the contents user downloads the contents from the server will be described.

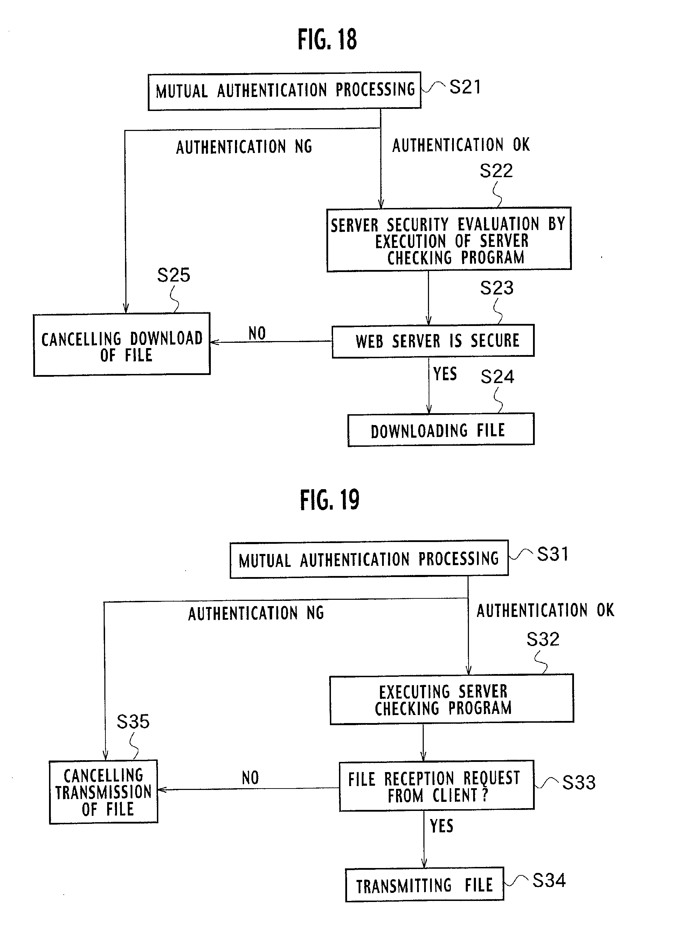

Fig. 18 shows a processing procedure of the client program 101.

Upon receiving the file reception request with respect to the server from the user, the file reception device 2 of the contents user activates the server checking program 103. The server checking program 103 carries out the mutual authentication via the network with the access target server program (step S21). Here the same value is used for the authentication secret key 812 of the server and the authentication secret key 1032 of the client, and the authentication based on the common key authentication, such as that defined by ISO/IEC 9798-2, for example, is used. By this scheme, it is possible to confirm that the correspondent has the authentication secret key.

What is important here is that the leakage of the authentication secret keys 812 and 1032 to the third person other than the server program and the client program such as a virus producer is prevented. The contents distribution server program 81 is encrypted. Consequently, it is impossible for the virus producer to analyze the contents distribution server program 81 and produce a fake correction patch or steal the authentication secret key to be used in the authentication with the server checking program 103. The client program is also encrypted by the same scheme so that it is impossible to steal the authentication secret key 1032.

When the authentication succeeds, the server checking execution program 1033 makes the server security level evaluation (step S22). When the authentication fails (negative at the step S23), the server program 81 refuses to accept the request of the server checking program 103 and the downloading of the file is cancelled (step S25). This is done in order to prevent a malicious server checking program from inquiring the server illegally and providing information useful for an attack to an attacker. For example, if the security hole has been discovered in the program of a specific version, the version information of the program can be information useful to an attacker for carrying out inquiry. Consequently, the contents distribution server program 81 provides the version number only to the server checking program 103 which has the proper authentication secret key.

When the server security level evaluation made by the server checking program 103 satisfies a desired standard of the user (affirmative at the step S23), the client program 101 downloads a desired file (step S24).

On the other hand, when the authentication fails at the step S21, the client program 101 carries out a prescribed error processing, and the contents downloading processing is cancelled (step S25).

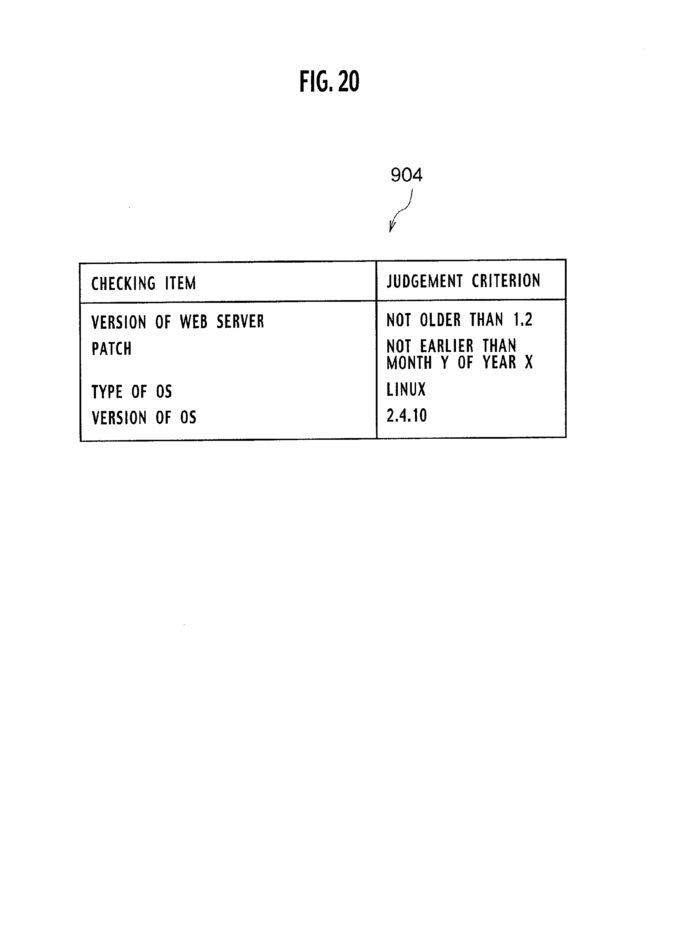

The evaluation items for evaluating the server security level are described in the policy table 904 as in an example shown in Fig. 20. The contents user defines in advance the checking items of the policy and their judgement criteria in this policy table 904, in a manner such as the server will be utilized if the version of the server is not older than 1.2, for example. By setting the judgement criteria in such a table format, there is an advantage that the judgement criteria can be changed easily.

It is not absolutely necessary for the contents user himself to describe this policy table 904, and it is possible for the client program distributor to provide a template, for example. It is also possible to specify a plurality of policies and make the evaluation using a combination of these policies. The application compares the checking result and the policy, and judges whether the contents or software should be downloaded or not. Consequently, there is no need for the application to return the checking result to the user host. Of course, it is also possible to check the version of the server and return the result to the user in order to inquire whether the downloading is permitted or not at each occasion.

Fig. 19 shows a processing procedure of the contents distribution server program 81.

The contents distribution server program 81 is executed on the file transmission device 6 of the server, and waiting to accept a request for the mutual authentication processing from the server checking program 103 of the client.

When the contents reception request is received from the contents user and the mutual authentication processing succeeds (step S31), the execution of the server checking execution program 1033 is permitted, and the necessary information is provided to the server checking program 103 (step S32). When the evaluation of the server security level satisfies a desired standard of the user, and the reception request for a desired file is received (affirmative at the step S33), the server program 81 transmits the file (step S34).

On the other hand, when the authentication fails at the step S31 or when it is judged that the server checking program 103 is not satisfying the security level and the file downloading cancellation request is received (negative at the step S33), the file transmission is cancelled (step S35).

According to the method for receiving contents from the contents distribution server described above, it is possible to expect that the server manager can be made more security conscious in the following two senses.

The first is that, when the contents are provided by the server of an old version, the users are expected to avoid utilizing that server so that the number of the server users decreases. Consequently, in order to keep the users, the server manager is required to constantly update the server to the secure version.

The second is that, the server can be checked from any user as long as it is providing a publicly disclosed service such as HTTP. This implies that if there is a security hole on that server this security hole is also publicly disclosed. Consequently, when the service is publicly disclosed, the server manager is simultaneously held responsible for the security management, so that it is possible to expect that the server manager becomes more security conscious.

### <Contents distribution scheme using a cache server>

Next, the case where the contents distribution server distributes the contents to a cache server once and the user's viewing program receives a desired contents from the cache server will be described.

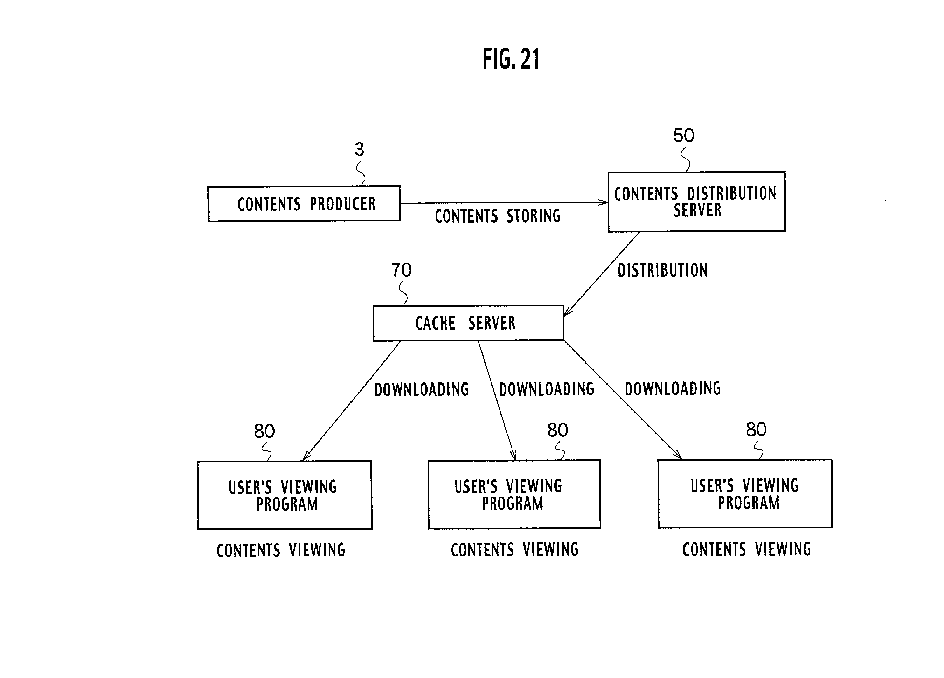

Fig. 21 shows a configuration of the transmission and reception network system containing a cache server. This transmission and reception network system comprises a contents producer 3, a contents distribution server 50, a cache server 70, and a plurality of user's viewing programs 80.

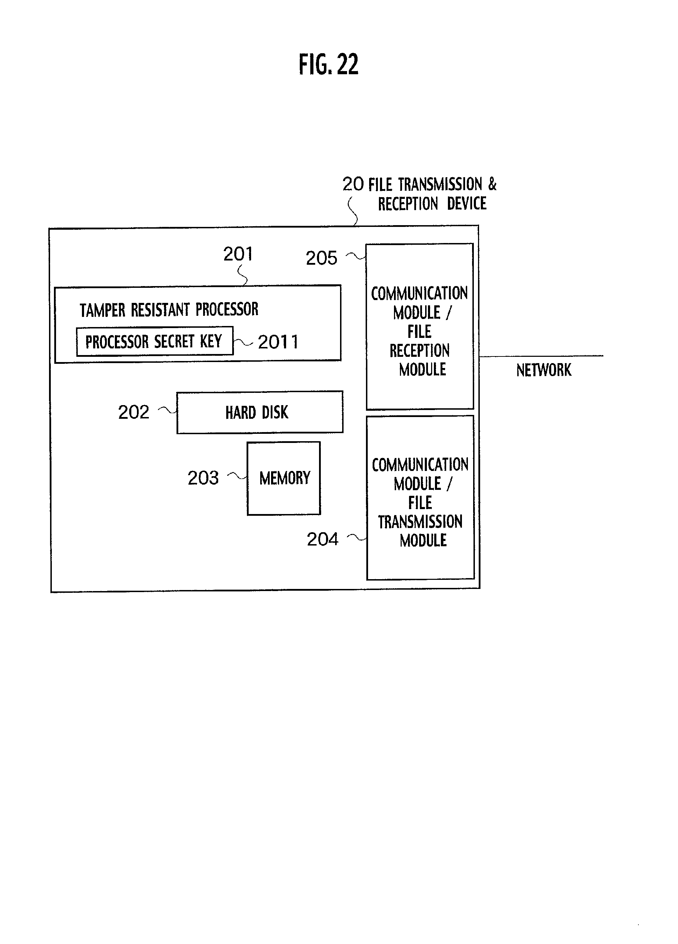

Fig. 22 shows a hardware configuration of the cache server 70, that is a file transmission and reception device 20 to be used as the cache server 70. The file transmission and reception device 20 comprises a tamper resistant processor 201 which maintains a processor secret key 2011 inside, a hard disk 202, a memory 203, a communication module/file transmission module 204, and a communication module/file reception module 205.

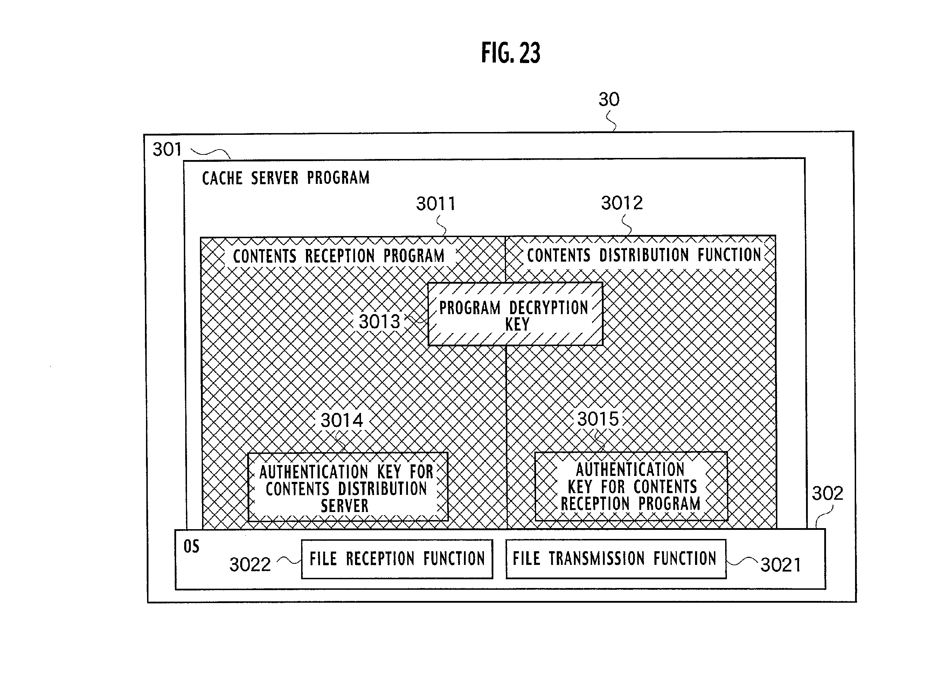

Fig. 23 shows a configuration of a software 30 of the cache server 70. The software 30 of the cache server 70 comprises a cache server program 301 and an OS 302. The cache server program 301 contains a contents reception program 301 having an authentication key for contents distribution server 3014, and a contents distribution function 3012 having an authentication key for contents reception program 3015. The cache server program 3011 also has a program decryption key 3013. Also, the OS 302 has a file transmission function 3021 and a file reception function 3021.

The cache server program 301 is encrypted by using the program encryption key corresponding to the program decryption key 3013. In addition, this program decryption key 3013 is encrypted by using the public key corresponding to the processor secret key 2011 of the tamper resistant processor 201 in the file transmission and reception device 20. Consequently, it is impossible to analyze or alter the software unless one knows the processor secret key 2011.

Note that the hardware configuration and the software configuration of the contents distribution server 50 are the same as those shown in Fig. 12 and Fig. 14, respectively. Also, the hardware configuration and the software configuration of the user's viewing program 80 are the same as those shown in Fig. 16 and Fig. 17, respectively.

In the following, the procedure for distributing the contents from the contents distribution server 50 to the user 160 through the cache server 70 will be described.

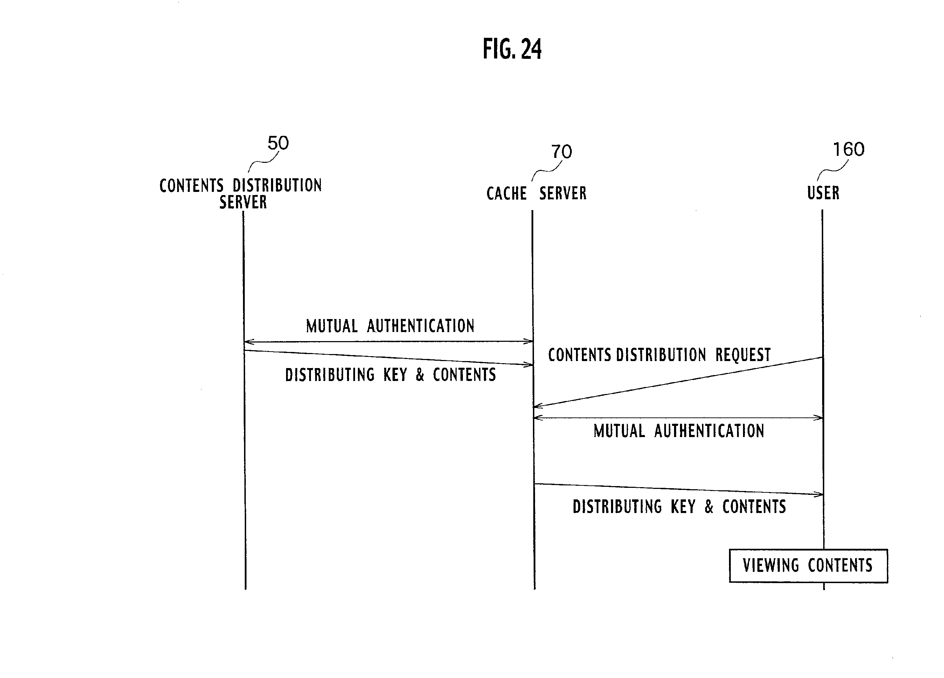

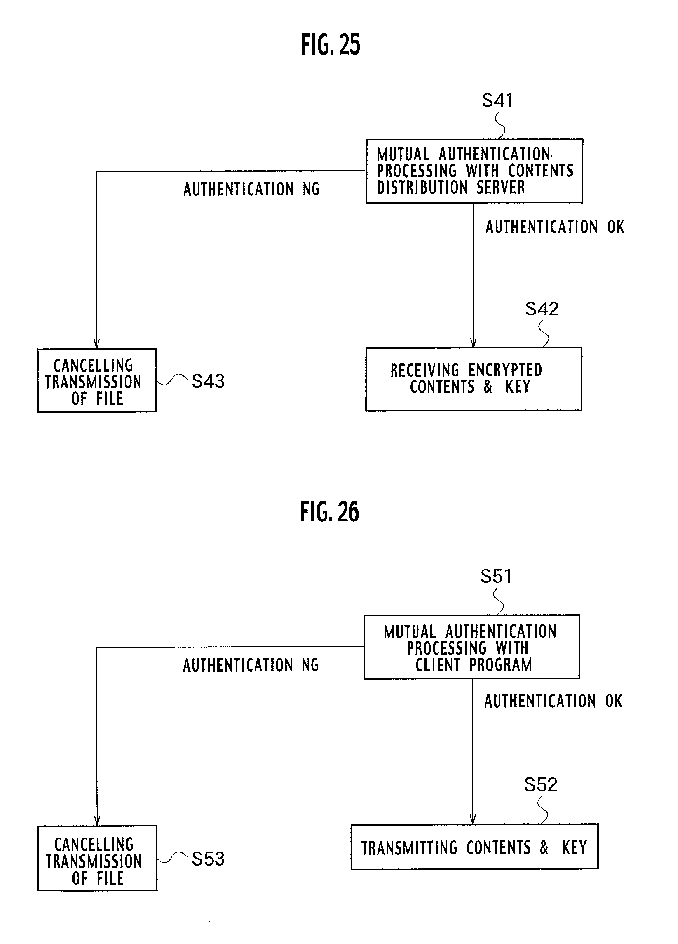

Fig. 24 shows a sequence of exchanges between the contents distribution server 50 and the cache server 70, and a sequence of exchanges between the cache server 70 and the user 160. Fig. 25 shows a processing procedure of the cache server 70 up to a point of receiving the contents from the contents distribution server 50. Fig. 26 shows a processing procedure of the cache server 70 up to a point of transmitting the contents to the user 160.

First, the contents distribution server 50 and the cache server 70 carry out the mutual authentication (step S41). The contents distribution server 50 and the cache server 70 respectively have the authentication key 812 and the authentication key 3014 for the mutual authentication. In the authentication, the same value is used for the authentication key 812 of the contents distribution server 50 and the authentication key 3014 of the cache server 70, and the common key authentication scheme as defined by ISO/IEC 9798-2 is used. By this scheme, it is possible to confirm that the correspondent has the authentication key.

When the authentication succeeds, the cache server 70 receives the contents encrypted by the contents distribution server 50 and a key for decrypting the contents (step S42). This key for decrypting the contents is stored into a memory region of the memory or the hard disk of the cache server 70 such that it is not leaked to any entity other than the contents distribution server 50 and the cache server 70 by using the encryption or the like. Note that, when the authentication fails, the contents transmission is cancelled, so that the cache server 70 will not receive the contents (step S43).

Next, with reference to Fig. 26, the procedure by which the user 160 downloads the contents from the cache server 70 will be described.

The cache server 70 carries out the mutual authentication processing with the contents reception program of the user 160 according to a distribution request from the user 160 (step S51). In this authentication processing, the authentication scheme similar to the authentication processing between the contents distribution server 50 and the cache server 70 is used. When the authentication succeeds, the cache server 70 transmits the contents and a key for decrypting the contents to the contents reception program of the user 160 (step S52). The transmission of the key through the communication path is done by using the well known encryption scheme such as the Diffie-Hellman scheme. Note that, when the authentication fails, the transmission of the contents is cancelled (step S53).

What is important here is that the key for decrypting the contents is not disclosed to the manager of the cache server and the contents user. As described above, the cache server program and the contents reception program are encrypted along with the key for decrypting the contents by using the program encryption key corresponding to the program decryption key so that they cannot be analyzed or altered.

Consequently, even if the malicious manager is managing the cache server 70, the contents cannot be decrypted by such a malicious manager, so that it becomes certain that the contents will be viewed by the contents reception program that has the proper authentication key, regardless of what kind of person is managing the cache server 70.

In addition, the license control such as whether or not to permit the contents duplication is executed by the contents reception program of the user according to the encryption attribute, so that it is guaranteed to the contents distributor that the eventual user is strictly observing the license even when the cache server 70 is used.

Consequently, there is no need for the contents distributor to manage the individual user by using the ID and the password as required conventionally. On the other hand, there is no need for the user side to disclose the privacy to the contents distributor more than what is absolutely necessary.

### [Authentication between the cache server and the application on the cache server]

The contents are received and stored at the cache server 70 under the presumption that the manager of the cache server 70 is not trusted. Here, normally the cache server 70 only carries out the authentication processing with the contents distribution server and the contents utilizing program and the contents will not be decrypted and changed at the cache server 70 so that there is no problem.

However, there are cases where it is necessary to temporarily decrypt the contents on the cache server 70, such as the case where the virus checking software is operated on the cache server 70.

In general, the virus checking program compares the contents with the information characteristically found in the virus, and the matching one is detected as the virus. At this point, the correct comparison cannot be made if the virus checking target contents is encrypted. Consequently, the virus checking program needs to temporarily decrypt the contents at a time of checking the contents.

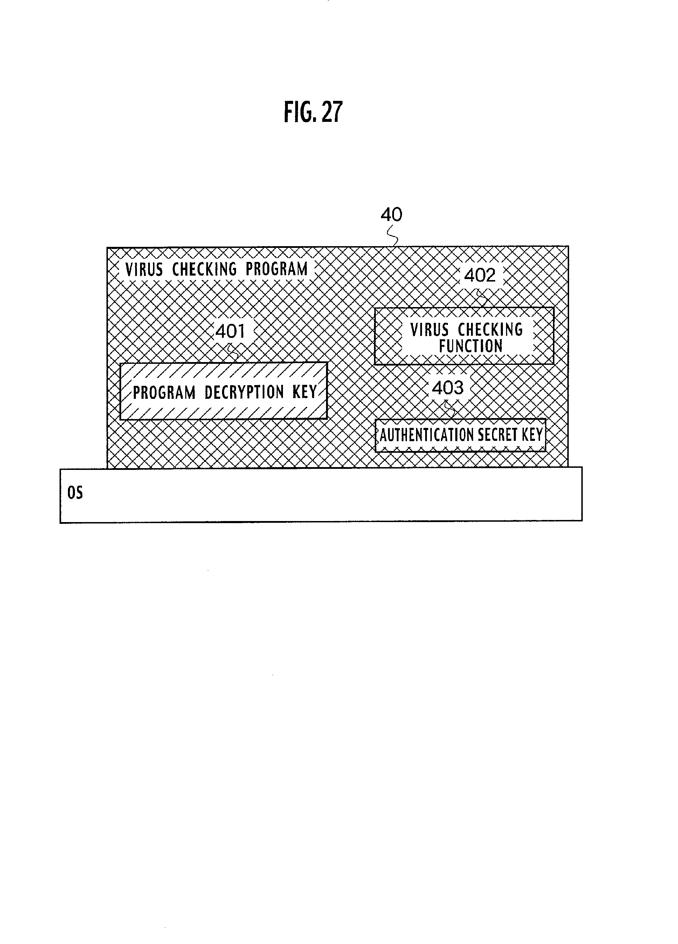

For this reason, the cache server 70 carries out the authentication processing to judge whether the virus checking program is a proper one or not. Fig. 27 shows a configuration of the virus checking program.

The virus checking program 40 is encrypted by using the program encryption key corresponding to the program decryption key 401. In addition, this program decryption key 401 is encrypted by using the processor public key corresponding to the processor secret key 2011 shown in Fig. 22. The virus checking program 40 has an authentication secret key 403 for carrying out the authentication with the cache server 70. This authentication secret key 403 is also encrypted similarly as the program. It is not absolutely necessary to encrypt the entire virus checking program 40 including a virus checking function 402, but it is preferable to encrypt the entire virus checking program 40 in order to improve the security level.

When the authentication succeeds, the cache server program 301 provides the key for decrypting the contents to the virus checking program 40. At this point, the key for decrypting the contents may be provided as it is, but it is also possible to decrypt the contents once and then encrypt the contents by using a temporary key inside the cache server program 301, and provide this temporary key to the virus checking program 40. In addition, at this point, the security level can be further improved by setting the valid period in the encryption attribute shown in Fig. 10 to be a short period of time.

By the above described processing, the virus checking program 40 can decrypt the contents by using the key provided from the cache server 70 and carries out the virus checking.

As described above, in this contents distribution scheme using the cache server, the prevention of the illegal leakage and alteration of the contents and the distribution of the processing load of the contents distribution server by utilizing the cache server can be made compatible, under the presumption that the contents distribution server, the cache server and the contents reception program are executed on the tamper resistant processors. In addition, even if the contents distribution server distributes the contents containing the virus, it is possible to detect the virus before the contents is distributed to the user by carrying out the virus checking at the cache server, so that it is also possible to reduce the management load on the contents distribution server.

As described above, according to embodiments of the present invention, a prescribed secret is stored in an encrypted state according to a corresponding program key by the contents receiving and viewing program executed at the reception device, so that this prescribed secret cannot be altered by a malicious person. Also, the contents transmission program executed at the transmission device authenticates the prescribed secret of the contents receiving and viewing program by using either the public key algorithm or the secret key algorithm, and transmits the contents by trusting the reception device only when that authentication succeeds, so that it is possible to protect the copyright owner by preventing the unlimited secondary use of the contents, while also protecting the privacy of the receiver.

Also, according to embodiments of the present invention, the secret key corresponding to the contents transmission program is stored in an encrypted state based on the program key by the contents transmission program executed at the transmission device, so that the secret key cannot be altered by a malicious person, and the contents receiving and viewing program of the reception device authenticates the contents transmission program of the contents source by using a prescribed public key algorithm based on the public key maintained in advance by the contents receiving and viewing program which is corresponding to the secret key of the contents transmission program, and receives the contents by trusting the contents transmission program only when that authentication succeeds, so that it becomes possible to detect the contents transmission program which has the security problem as the malicious attacker has intervened and refuse to receive the contents from such a contents transmission program.

Also, according to embodiments of the present invention, the contents transmission program and the contents receiving and viewing program carry out the mutual authentication, and the contents receiving and viewing program verifies the security level of the contents transmission program by using a distribution device checking program when the authentication succeeds, and receives the contents regarding the contents reception request from the contents transmission program only when the contents transmission program is judged as safe, so that it becomes possible to detect the contents transmission program that has the security problem as the malicious attacker has intervened and refuse to receive the contents from such a contents transmission program.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A contents distribution method executed by a transmission device having a microprocessor and a reception device having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising:
storing a prescribed secret in a state of being encrypted by using a corresponding program key and proving that the prescribed secret is maintained to the transmission device, by a contents receiving and viewing program executed on the reception device;
receiving a reception request specifying contents from the contents receiving and viewing program of the reception device by a contents transmission program executed on the transmission device;
authenticating the prescribed secret of the contents receiving and viewing program of the reception device that issued the reception request, by a prescribed public key algorithm based on a public key that is corresponding to a secret key of the contents receiving and viewing program and maintained in advance by the contents transmission program, or by a secret key algorithm based on a secret key that is maintained in advance by the contents transmission program and shared with the contents receiving and viewing program, by the contents transmission program; and
permitting a transmission of the contents encrypted by using the prescribed secret that is shared between the contents receiving and viewing program and the contents transmission program exclusively from other programs, only when it is proved that the contents receiving and viewing program has the prescribed secret at the authenticating step, by the contents transmission program.

2. The contents distribution method of claim 1, further comprising:
judging whether the contents request has a copyright protection specified therein or not by the contents transmission program;
wherein the contents transmission program carries out the authenticating step with respect to the contents which is judged as having the copyright protection specified therein by the judging step.

3. The contents distribution method of claim 1, further comprising:
controlling viewing of the contents according to information regarding a valid period, upon receiving the contents that contains the information regarding the valid period, by the contents receiving and viewing program.

4. The contents distribution method of claim 1, wherein the receiving step receives the reception request specifying the contents which contains at least one of a restriction to be imposed at a time of utilizing the contents, a copyright indication for the contents, and an accounting information for the contents.

5. The contents distribution method of claim 1, further comprising:
attaching information for identifying at least one of the reception device that received the contents and an owner of the reception device, to the contents received when the contents is received by the contents receiving and viewing program.

6. A contents distribution method executed by a transmission device having a tamper resistant microprocessor which maintains a processor secret key inside and an external memory, and a reception device, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising:
storing a secret key that is set in correspondence to the contents transmission device, in a state of being encrypted by using a corresponding program key, by a contents transmission program executed on the transmission device;
authenticating the contents transmission program that is a transmission source of contents, by a prescribed public key algorithm based on a public key that is corresponding to the secret key of the contents transmission program and maintained in advance by a contents receiving and viewing program, by the contents receiving and viewing program of the reception device; and
receiving the contents from the contents transmission program only when it is proved that the contents transmission program has the secret key at the authenticating step, by the contents receiving and viewing program.

7. A contents distribution method executed by a transmission device and a reception device each having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, the contents distribution method comprising:
storing a prescribed secret in a state of being encrypted by using a corresponding program key and proving that the prescribed secret is maintained to a correspondent, by each one of a contents receiving and viewing program executed on the reception device and a contents transmission program executed on the transmission device;
permitting an execution of a transmission device checking program received from the reception device at the transmission device, and verifying a security level of the transmission device by the transmission device checking program at the reception device, when it is judged that the correspondent has the prescribed secret at the proving step; and
receiving contents regarding a contents reception request from the transmission device at the reception device, when it is judged that the transmission device is secure.

8. The contents distribution method of claim 7, , wherein the reception device has a table encrypted by a program encryption key, in which judgement criteria to be used in verifying the security level are described, and verifies the security level according to the judgement criteria described in the table.

9. A contents distribution system comprising a transmission device having a microprocessor and a reception device each having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein:
the tamper resistant microprocessor of the reception device executes a contents receiving and viewing program for storing a prescribed secret in a state of being encrypted by using a corresponding program key and proving that the prescribed secret is maintained to the transmission device; and
the microprocessor of the transmission device executes a contents transmission program for receiving a reception request specifying contents from the contents receiving and viewing program of the reception device, authenticating the prescribed secret of the contents receiving and viewing program of the reception device that issued the reception request, by a prescribed public key algorithm based on a public key that is corresponding to a secret key of the contents receiving and viewing program and maintained in advance by the contents transmission program, or by a secret key algorithm based on a secret key that is maintained in advance by the contents transmission program and shared with the contents receiving and viewing program, and permitting a transmission of the contents encrypted by using the prescribed secret that is shared between the contents receiving and viewing program and the contents transmission program exclusively from other programs, only when it is proved that the contents receiving and viewing program has the prescribed secret.

10. A contents distribution system comprising a transmission device having a tamper resistant microprocessor which maintains a processor secret key inside and an external memory, and a reception device, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein:
the tamper resistant microprocessor of the transmission device executes a contents transmission program for storing a secret key that is set in correspondence to the contents transmission device, in a state of being encrypted by using a corresponding program key; and
the reception device executes a contents receiving and viewing program for authenticating the contents transmission program that is a transmission source of contents, by a prescribed public key algorithm based on a public key that is corresponding to the secret key of the contents transmission program and maintained in advance by the contents receiving and viewing program, and receiving the contents from the contents transmission program only when it is proved that the contents transmission program has the secret key.

11. A contents distribution system comprising a transmission device and a reception device each having a tamper resistant microprocessor which maintains a processor secret key inside and an external memory, the tamper resistant microprocessor being capable of obtaining a plurality of program keys by decrypting a plurality of distribution keys respectively corresponding to a plurality of programs by using the processor secret key, and executing the plurality of programs arranged in the external memory in a state of being encrypted by using the plurality of program keys, by decrypting the plurality of programs by using respectively corresponding program keys, wherein:
the tamper resistant microprocessor of the reception device executes a contents receiving and viewing program and the tamper resistant microprocessor of the transmission device executes a contents transmission program, for storing a prescribed secret in a state of being encrypted by using a corresponding program key and proving that the prescribed secret is maintained to a correspondent;
the transmission device permits an execution of a transmission device checking program received from the reception device, and the reception device verifies a security level of the transmission device by the transmission device checking program, when it is judged that the correspondent has the prescribed secret; and
the reception device receives contents regarding a contents reception request from the transmission device, when it is judged that the transmission device is secure.
